(19) Europäisches Patentamt

European Patent Office

Office européen des brevets

(11) **EP 0 704 293 B1**

(12) **EUROPÄISCHE PATENTSCHRIFT**

(45) Veröffentlichungstag und Bekanntmachung des Hinweises auf die Patenterteilung:
**29.03.2000 Patentblatt 2000/13**

(51) Int Cl.$^7$: **B29C 45/78**

(21) Anmeldenummer: **95114774.3**

(22) Anmeldetag: **20.09.1995**

(54) **Verfahren zur Temperierung von Spritzgiessmaschineneinheiten und Formwerkzeugeinheiten für die Kunstoffverarbeitung**

Temperature regulating process for injection units and injection moulds for plastics

Procédé de régulation en température d'unités d'injection et de moules d'injection de matières plastiques

(84) Benannte Vertragsstaaten:
**AT BE CH DE DK ES FR GB GR IT LI NL PT SE**

(30) Priorität: **27.09.1994 DE 4436117**
**27.09.1994 DE 4436126**

(43) Veröffentlichungstag der Anmeldung:
**03.04.1996 Patentblatt 1996/14**

(73) Patentinhaber: **Liehr, Erich, Dr.**
**01458 Hermsdorf (DE)**

(72) Erfinder:
• **Liehr, Erich, Dr.**
**D-01458 Hermsdorf (DE)**
• **Hofmann, Dietmar, Dipl.-Math.**
**D-01458 Ottendorf-Okrilla (DE)**

(74) Vertreter: **Tragsdorf, Bodo, Dipl.-Ing.**
**Patentanwalt**
**Heinrich-Heine-Str. 3**
**06844 Dessau (DE)**

(56) Entgegenhaltungen:
EP-A- 0 273 981        WO-A-92/08598
WO-A-94/22656          CH-A- 484 711
GB-A- 2 276 017

• PATENT ABSTRACTS OF JAPAN vol. 013, no. 204 (M-825), 15.Mai 1989 & JP 01 027906 A (OSAKA REIKEN:KK), 30.Januar 1989,
• PATENT ABSTRACTS OF JAPAN vol. 013, no. 455 (M-879), 13.Oktober 1989 & JP 01 176538 A (JAPAN STEEL WORKS LTD:THE), 12.Juli 1989,
• PATENT ABSTRACTS OF JAPAN vol. 013, no. 193 (M-822), 9.Mai 1989 & JP 01 018620 A (KOMATSU LTD), 23.Januar 1989,
• PLASTVERARBEITER, Bd. 35, Nr. 5, Mai 1984, SPEYER/RHEIN DE, Seiten 74-81, XP002026035 WERNER KOTZAB: "Exakte Temperierung bei geringem Kostenaufwand"

**Beschreibung**

Die Erfindung betrifft ein Verfahren zur Temperierung von Spritzgießmaschineneinheiten, insbesondere für die Verarbeitung vernetzbarer Polymere, und Formwerkzeugeinheiten für die Kunststoffverarbeitung, mit mindestens einem Temperierkreislauf.

Beim Spritzgießen ist der thermische Betriebszustand des Werkzeuges mit der Werkzeugtemperatur als Maß neben der Zylinder- und Schmelzetemperatur eine der wichtigsten thermischen Funktionsgrößen. Er übt einen großen Einfluß auf die Fließfähigkeit der Kunststoffschmelze, die Zykluszeit und die Qualität der Formteile, insbesondere die Oberflächengüte, die Schwindung und den Verzug aus.

Der thermische Betriebszustand des Plastifizierzylinders ist für die Verarbeitung von vernetzenden Hochpolymeren von entscheidender Bedeutung. Derartige Werkstoffe erfordern bei der Verarbeitung zu Formteilen beim Spritzgießen relativ niedriges Temperaturniveau während der Verweilzeit im Plastifizierzylinder, um eine vorzeitige Vernetzung bzw. Teilvernetzung der Formmasse zu verhindern. Die bei der Plastifizierung durch Friktion der Masse, d.h. durch Umwandlung von mechanischer Energie, entstehende Wärmemenge ist im stationären , d.h. eingefahrenen, Maschinenzustand gewöhnlich größer als die Wärmemenge, die zum Erreichen einer optimalen Masseviskosität notwendig ist.

Die Temperaturführung der Formmasse bzw. Schmelze im System Schnecke/Zylinder muß so gesteuert werden, daß keine vorzeitigen Vernetzungsreaktionen infolge zu hoher Massetemperaturen auftreten. Die exakte Temperaturführung für die Formmasse über die Zylindertemperierung übt einen wesentlichen Einfluß auf die Qualität der herzustellenden Formteile aus.

In der Praxis konnte sich bisher nur die Arbeitsweise mit Temperiergeräten durchsetzen, die aber einige grundlegende Nachteile haben, die im einzelnen nachfolgend bei der Beschreibung des Einsatzes von Temperiergeräten für Spritzgießwerkzeuge mitgenannt sind.

Es sind bereits verschiedene Verfahren zur Steuerung des thermischen Betriebszustandes, d.h. zum Temperieren von Spritzgießwerkzeugen, bekannt.

Wie erwähnt konnte sich in der Praxis bisher nur die Arbeitsweise mit Temperiergeräten durchsetzen. An der Einführung der Werkzeugtemperierung als integraler Bestandteil der Spritzgießmaschinen wird zur Zeit noch gearbeitet. Eine erste Variante besteht darin, das Temperiergerät in der Spritzgießmaschine unterzubringen (Plaste und Kautschuk 1982, Heft 2, S. 86).

Das Temperiergerät befindet sich somit in unmittelbarer Werkzeugnähe, um Wärmeverluste durch das Leitungssystem zu vermeiden. Diese Lösung führt zu einem geringen Platzbedarf für die Aufstellung der Spritzgießmaschine, die grundlegenden Nachteile dieses Temperierverfahrens bleiben jedoch bestehen. Das sind vor allem die energetisch ungünstige Arbeitsweise und die hohen Anschaffungskosten für die Temperiergeräte.

Aus der DD-PS 203 011 ist ein Verfahren bekannt, bei dem die Kühlphase nach dem Einspritzvorgang unterbrochen wird, danach eine Temperphase erfolgt und sich daran eine erneute Kühlphase anschließt, die so lange andauern soll, bis der Restenergiegehalt des Formteiles ausreicht, um das Spritzgießwerkzeug auf eine für den nachfolgenden Spritzgießzyklus günstige Temperatur zu erwärmen.

Der Nachteil dieses Verfahrens besteht vor allem darin, daß technologisch bedingte Unterschiede in der Wärmeabfuhr der einzelnen Kühlphasen zu Beginn des Fertigungsprozesses manuell durch unterschiedliche Drosselung des Kühlwasserstromes an den Stellventilen oder durch Variationen der Einstellung stellbarer Zeitrelais die Dauer der Kühlphasen abgestimmt werden müssen. Dies erfordert einen erheblichen Arbeitsaufwand und stellt an das Bedienpersonal erhöhte Anforderungen. Außerdem können mit diesem Verfahren, ebenso wie bei den konventionellen Temperiergeräten, unvermeidbare Störungen des Fertigungsablaufes, wie z.B. Kühlwassertemperatur- und Kühlwasserdurchsatzschwankungen, Änderungen hinsichtlich der Temperatur, insbesondere der Temperatur der Schmelze, und der Zykluszeit, in ihrer energetischen Auswirkung auf die Formteilqualität nicht ausgeregelt werden. In Abhängigkeit von der Größe der energetischen Wirkung dieser Störgrößen kann sich der thermodynamische Zustand des Werkzeuges mehr oder weniger stark ändern und bei den hergestellten Formteilen können Qualitätsunterschiede auftreten, die zu Ausschuß führen. In der US-PS 4,420,446 ist ein Verfahren zur Werkzeugtemperaturkontrolle beim Spritzgießen beschrieben. Dabei wird eine ausgewählte Kontrolltemperatur als Solltemperatur vorgegeben. Die Werkzeugtemperatur wird in unmittelbarer Nähe des Formnestes gemessen. In Abhängigkeit von Über- bzw. Unterschreiten der Solltemperatur werden die Ventile des Kühlkreislaufes geöffnet bzw. geschlossen. Zusätzlich werden bei Über- bzw. Unterschreiten vorgegebener oberer und unterer Grenztemperaturen optische und akustische Warnsignale abgegeben.

Eine ähnliche Lösung, bei der die mit der Schmelze zugeführte Wärme zum Temperieren der Werkzeugwand ausgenutzt werden soll, ist in der Zeitschrift "Plastverarbeiter" 1984, Heft 5, S. 77 bis 80 beschrieben. Die Temperierung wird dabei durch einen Mikroprozessor gesteuert, über einen Thermosensor wird an der Werkzeugkontur die durch die Einbringung der Schmelze hervorgerufene Temperaturerhöhung gemessen und der Mikroprozessor regelt (in Abhängigkeit davon) die Öffnungszeit des Magnetventilsystems für die Kühlwasserzufuhr. Es findet eine sogenannte Impulskühlung statt und das Werkzeug übernimmt die Funktion des Wärmetauschers.

Aus der EP 0 218 919 B 1 ist ein Verfahren zur Eichung und Korrektur der Vorrichtung zur Werkzeugtemperierung bei Spritzgießmaschinen bekannt, bei dem ein Rechner das Schließen und Öffnen der Ventile als Funktion eines Temperaturunterschiedes in den Formwerkzeugen nach einer Meßperiode mit maximal geöffneten Ventilen und einer Meßperiode mit geschlossenen Ventilen steuert. Nach Erreichen der Solltemperaturen werden zwei Eichzyklen durchgeführt, in denen das Streckenverhalten des Werkzeuges durch den gemessenen Temperaturabfall bzw. -anstieg getestet wird. Ausgehend von den ermittelten Temperaturdifferenzen errechnet der Rechner die Öffnungszeiten der Ventile, die notwendig sind, um die vorgegebene Solltemperatur einzuhalten. Die Temperierung erfolgt nur auf der Basis der momentan gemessenen Werkzeugtemperatur. Diese bekannten, auf dem gleichen Prinzip basierenden Verfahren, haben folgende Nachteile.

Die große Nähe der Temperaturfühler zur Werkzeugkontur, also zur heißesten Zone des Werkzeuges, führen notwendigerweise bei jedem Einspritzvorgang, auch beim Anfahren, zu einer Überschreitung der Solltemperatur und damit zur Auslösung der Kühlung.

Die Temperierung in alleiniger Abhängigkeit von der momentan gemessenen Temperatur kann bei einer immer vorhandenen Trägheit des thermischen Ausgleichs zwischen Schmelze und Werkzeug, sowie zwischen Kühlmedium und Werkzeug zu einer zeitlichen Verschiebung der Werkzeugtemperierung und damit zu Werkzeugtemperaturen führen, die deutlich unterhalb bzw. oberhalb der gewählten Kontrolltemperatur liegen. Sowohl Störgrößen im Spritzgießprozeß, z.B. ein vermindertes Kühlmittelangebot, als auch die ungünstige Lage von Kühlflächen zur Werkzeugkontur bei komplizierten Werkzeugen, werden durch diese Verfahren nicht immer ausreichend kompensiert, eine Anpassung der Temperierbedingungen an die momentanen Prozeßparameter ist somit nicht durchgängig möglich.

Ein weiteres bekanntes Temperierverfahren (WO 92/08598) steuert den Temperiermediendurchfluß nach Errechnung einer mittleren Werkzeugtemperatur oder mittleren Rücklauftemperatur des Temperiermediums bzw. nach einer Trendermittlung der mittleren Werkzeugtemperaturen oder der mittleren Rücklauftemperatur mehrerer zurückliegender Zyklen. Dabei wird die mittlere Werkzeugtemperatur mit einer vorgegebenen Solltemperatur verglichen und das Kühlregime im Folgezyklus verändert, falls die mittlere Werkzeugtemperatur von der vorgegebenen Solltemperatur abweicht. Der Meßort für die Temperaturmessung im Werkzeug bzw. im Rücklauf des Temperiermediums wird als nicht kritisch angesehen, was jedoch im Widerspruch zu den Erkenntnissen aus der Praxis steht.

Zur Öffnungsdauer der Magnetventile im Zyklus werden in oben beschriebenem Verfahren nur allgemeine Aussagen getroffen. Zum einen wird das Magnetventil geöffnet, falls die mittlere Temperatur des vorangegangenen Zyklus oberhalb einer oberen Grenztemperatur liegt, zum anderen, wenn die mittleren Temperaturen einer Anzahl vorangegangener Zyklen einen steigenden Trend in der Nähe der Solltemperatur signalisieren. Die Öffnungsdauer selbst soll abhängig sein von der "Rate" der Temperaturänderung bzw. der Größe der Differenz zum akzeptierten Temperaturbereich. Auf eine konkrete nachvollziehbare Berechnungsvorschrift wird dabei jedoch nicht näher eingegangen.

Die mit diesem Verfahren praktizierte Regelung der Werkzeugtemperatur im Folgezyklus läßt akut auftretende Störungen im Zyklus unberücksichtigt. Diese Störungen werden erst nachträglich und über den relativ trägen Mechanismus einer mittleren Temperatur ausgeregelt. Es ist anzunehmen, daß die beschriebene Regelung im allgemeinen und bei wirkenden Störgrößen im besonderen der tatsächlichen Werkzeugtemperatur "hinterherläuft", wobei die beabsichtigte hohe Prozeßstabilität nicht erreicht wird.

Mit der Aussage zum Meßort und in Kenntnis dessen, daß die Temperaturverteilung im Werkzeug einem Temperaturfeld genügt, bestehen aus praktischen Erfahrungen heraus bei einer willkürlichen Festlegung des Meßortes im Werkzeug berechtigte Zweifel an der Erreichung des angestrebten Zieles. Bei der Temperaturmessung im Temperiermedienrücklauf sind es mehrere Kritikpunkte, die die beabsichtigte Wirkung des Verfahrens mehr oder weniger in Frage stellen. Um die mittlere Rücklauftemperatur in Bezug auf die jeweilige Werkzeugtemperatur zu errechnen, ist eine Temperaturmessung über die gesamte Zyklusdauer im fließenden Medium erforderlich. Das wiederum bewirkt eine ständige, wenn auch gedrosselte, zusätzliche Wärmeabfuhr aus dem Werkzeug. In Anwendungen, bei denen mittlere oder sogar hohe Werkzeugtemperaturen benötigt werden, kann das geforderte Temperaturniveau im Werkzeug nicht gehalten werden. Eine Messung der Vorlauftemperatur findet nicht statt, das hat zur Folge, daß ein wesentlicher Einflußfaktor des thermischen Betriebszustandes des Werkzeuges unberücksichtigt bleibt und bei Veränderungen unvermeidbar zu Abweichungen vom thermischen Sollzustand des Werkzeuges führt. Desweiteren sind die, bei der eingefahrenen Maschine im Störfall auftretenden Abweichungen einer mittleren Rücklauftemperatur zu einer vorgegebenen Solltemperatur, vor allem bei größeren Volumenströmen, erfahrungsgemäß so gering, daß eine sinnvolle Einflußnahme auf die Durchflußdauer des Temperiermediums nicht immer möglich ist.

Der Erfindung lag die Aufgabe zugrunde, ein Verfahren zur Temperierung von Spritzgießmaschineneinheiten, insbesondere für die Verarbeitung vernetzbarer Polymere, und Formwerkzeugeinheiten für die Kunststoffverarbeitung, mit mindestens einem Temperierkreislauf, wobei die Rücklauftemperatur des Temperiermediums oder die Zylinder- oder Werkzeugtemperatur gemessen und im Ergebnis eines Ist-Soll-Vergleiches der Durchfluß des Temperiermediums verändert wird, zu schaffen, das unter Berücksichtigung der momentanen Parameter des Spritzgießvorganges, einschließlich auftretender Störungen des Prozesses, eine hinreichend genaue Konstanz des thermischen Betriebszustandes des Werkzeuges bei gleichzeitig selbsteinstellender Regelung gewährleistet und ohne zusätzliche Energie arbeitet.

Diese Aufgabe wird durch ein Verfahren mit den Merkmalen des Patentanspruches 1 gelöst. Weitere Ausgestaltungsvarianten der Erfindung sind in den Unteransprüchen 2 bis 12 angegeben.

Bei der Lösung der Aufgabe wurde von folgendem Grundgedanken ausgegangen: Der Wärmeinhalt im Werkzeug- bzw. Plastifizierzylinder wird bestimmt von wärmezuführenden Komponenten (Wärmemenge der eingespritzten Schmelze, Heißkanaltemperierung, ...) und wärmeabführenden Komponenten (Werkzeug- bzw. Plastifizierzylinderkühlung, Wärmeabfuhr durch Konvektion und Strahlung, Wärmeleitung). Soll der thermische Betriebszustand des Werkzeuges bzw. Plastifizierzylinders während des Spritzgießens konstant gehalten werden, müssen die im Fertigungsprozeß unvermeidbaren Schwankungen in den einzelnen Komponenten, die den Wärmeinhalt bestimmen, in ihrer Auswirkung auf den thermischen Betriebszustand, z.B. des Werkzeuges, kompensiert werden. Dabei ist als Wärmeabfuhr aus dem Werkzeug nur die Werkzeugkühlung bzw. -temperierung gezielt beherrschbar, insbesondere besteht die Notwendigkeit, die zeitliche Dauer des Temperiermediendurchflusses im Werkzeug so zu steuern, daß Störungen jeder Art, die auf den Wärmeinhalt des Werkzeuges wirken, wie z.B. Veränderungen in der Temperatur der Schmelze, Schwankungen der Temperiermedienvorlauftemperatur und des -volumens, Veränderungen der Zykluszeit, Schwankungen der Umgebungstemperatur u. a., ausgeglichen werden. Die folgenden prinzipiellen Erläuterungen beziehen sich auf die Varianten der Messung der Werkzeugtemperatur bzw. der Zylindertemperatur.

Der Temperierprozeß wird in zwei Phasen, eine Anfahrphase und eine stationäre Betriebsphase, mit jeweils unterschiedlichen Temperierbedingungen getrennt. Die je Zyklus abgesetzten Temperierimpulse, insbesondere in der stationären Betriebsphase, werden immer zum Zeitpunkt $Z_1$, der durch ein Signal der Maschinenablaufsteuerung festgelegt wird, in zeitlicher Nähe des Einspritzvorganges bei der Werkzeugtemperierung bzw. in zeitlicher Nähe des Plastifiziervorganges, des Beginns der Schneckenrotation, bei der Temperierung von Plastifizierzylindern eingeleitet, um im Zeitbereich der größten Temperaturdifferenz zwischen eingespritzter Schmelze und Temperierkanal die erforderliche Wärmeableitung zu bewirken. Spätestens zum Zeitpunkt $Z_2$ wird jede Temperierung im Zyklus beendet, wobei der Zeitpunkt $Z_2$ durch ein Signal aus der Maschinenablaufsteuerung festgelegt wird, das zu einem definierten Zeitpunkt in zeitlicher Nähe des Zyklusendes ausgelöst wird. Während der gesamten Zyklusdauer wird kontinuierlich die mittlere Werkzeugtemperatur an dem für den jeweiligen Temperierkreislauf, thermisch sowohl von der eingespritzten Schmelze als auch der Temperierung gleichwertig beaufschlagtem Ort gemessen, wobei dieser Ort sich etwa im Bereich der geometrischen Mitte zwischen Formkontur und Kühlkanal bzw. -fläche und im Bereich der Mitte zwischen Kühlwassereingang und -ausgang in einem hinreichend großem Abstand zur Formkontur befindet, bzw. bei der Zylindertemperierung im Bereich der geometrischen Mitte zwischen

Zylinderinnenwand und Temperierkanal. Nach dem erstmaligen Erreichen oder Überschreiten der vorgegebenen Werkzeugsolltemperatur wird nach einem noch zu beschreibenden vorgegebenen Modus ein sogenannter Referenzzyklus ausgewählt, womit die Anfahrphase beendet ist. Der Wärmeinhalt in diesem Referenzzyklus dient in der Regel als Sollgröße für den Wärmeinhalt aller nachfolgenden Zyklen.

Als die für den Wärmeinhalt des Werkzeuges in Abhängigkeit von einem Zeitintervall im Zyklus relevante Größe wird $WRG(u_1,u_2)$ (die dem Wärmeinhalt Relevante Größe) gemäß (1) eingeführt.

$$WRG(u_1,u_2) = \int_{u_1}^{u_2} T(t)\, dt \qquad (1)$$

$WRG(u_1,u_2)$ wird analog zum Integral der Temperaturkurve $T(t)$ über der Zeitachse zwischen den Zeitpunkten $u_1$ und $u_2$ definiert und berechnet, wobei $u_1$ und $u_2$ die Intervallgrenzen des Zeitintervalls bezeichnen.

Erstmalig wird $WRG(Z_1,t_D)$ für den ausgewählten Referenzzyklus berechnet, wobei $t_D$ die für den Referenzzyklus berechnete Temperierdauer bedeutet.

$$WRG_{ref}(Z_1, t_D) = \int_{Z_1}^{Z_1 + t_D} T(t)\, dt$$

In allen Folgezyklen wird zum Zeitpunkt $Z_1$ des jeweiligen Zyklus der Temperierimpuls der Dauer $t_D$ gestartet, wobei $t_D$ als Gegenstand eines noch zu beschreibenden Korrekturverfahrens im Verlauf des jeweiligen Zyklus und bei auftretenden Abweichungen des Temperaturverlaufes zum Temperaturverlauf des sogenannten Referenzzyklus korrigiert wird. Dazu wird jeder Folgezyklus beginnend vom Zeitpunkt $Z_1$ bis zum Ende der Temperierdauer $t_D$ in kleinste Zeitintervalle $(t_{i-1}, t_i)$ unterteilt, in jedem Zeitpunkt $t_i$ die Temperatur gemessen und der Wert $WRG_{ist}(t_{i-1}, t_i)$ gemäß (1) berechnet.

$$WRG_{ist}(t_{i-1}, t_i) = \int_{t_{i-1}}^{t_i} T(t)\, dt$$

$WRG_{ist}(t_{i-1}, t_i)$ wird permanent für jeden Zeitpunkt $t_i$ und bis zum Ablauf der Temperierdauer $t_D$ mit dem Wert $WRG_{ref}(t_{i-1}, t_i)$ des Referenzzyklus und immer zum zyklisch gleichen Zeitpunkt gemäß (2) verglichen.

$$WD(t_i) = WRG_{ist}(t_{i-1}, t_i) - WRG_{ref}(t_{i-1}, t_i) \tag{2}$$

Die Differenz beider Wertgrößen $WD(t_i)$ signalisiert eine Differenz der aus dem Werkzeug in diesem Zeitintervall $(t_{i-1}, t_i)$ abgeführten Wärmemenge und wird verfahrensgemäß für eine Korrektur der Temperierdauer $t_D$ um die Korrekturzeit $t_{korr}(t_i)$ im laufenden Zyklus genutzt.

Dabei gilt für die Ergebnisse von (2) folgende Fallunterscheidung:

$WD(t_i) > 0$:  im Vergleich zum zyklisch gleichen Zeitintervall des Referenzzyklus ist der Wärmeinhalt des Werkzeuges im Istzyklus höher, die Dauer der Temperierung muß um den Wert $t_{korr}(t_i)$ verlängert werden.

$WD(t_i) < 0$:  im Vergleich zum zyklisch gleichen Zeitintervall des Referenzzyklus ist der Wärmeinhalt des Werkzeuges im Istzyklus geringer, die Dauer der Temperierung muß um den Wert $t_{korr}(t_i)$ verkürzt werden.

$WD(t_i) = 0$:  eine Korrektur der Temperierdauer ist nicht notwendig

Zur wertmäßigen Berechnung von $t_{korr}(t_i)$ wird von folgenden Überlegungen ausgegangen:
Angenommen es gelte der Fall $WD(t_i) > 0$. Die zur Abfuhr des gemäß (2) errechneten wärmemengenproportionalen Überschußbetrages notwendige Zeit $t_{korr}(t_i)$ wird zum Zeitpunkt $t_i$ zur vorgegebenen Temperierdauer $t_D$ addiert.

Es gilt

$$t_D(t_i) = t_D(t_{i-1}) + t_{korr}(t_i),$$

wobei $t_{korr}(t_i)$ aus folgender Beziehung herzuleiten ist:

$$WD(t_i) = \int_{t_D(t_{i-1})}^{t_D(t_{i-1}) + t_{korr}(t_i)} TE(t)\, dt,$$

wobei TE(t) als Temperatureinheit verstanden wird, für die gilt:

$$TE(t) = 1 \text{ für } t > 0 \tag{3}$$

Damit gilt

$$WRG_{ist}(t_{i-1}, t_i) - WRG_{ref}(t_{i-1}, t_i) = \int_{t_D(t_{i-1})}^{t_D(t_{i-1}) + t_{korr}(t_i)} TE(t)\, dt$$

$$\int_{t_{i-1}}^{t_i} T(t)_{ist}\, dt - \int_{t_{i-1}}^{t_i} T(t)_{ref}\, dt = \int_{t_D(t_{i-1})}^{t_D(t_{i-1}) + t_{korr}(t_i)} TE(t)\, dt$$

Nach Einsetzen der Zeitwerte und unter der Voraussetzung, daß die Länge des Zeitintervalles gegen Null und damit die Werte $T(t_{i-1})$ gegen die Werte $T(t_i)$ gehen, ergibt sich

$$T(t_i)_{ist} * (t_i - t_{i-1}) - T(t_i)_{ref} * (t_i - t_{i-1}) = TE(t_D)_{ref} * (t_D + t_{korr} - t_D)$$

$$(T(t_i)_{ist} - T(t_i)_{ref}) * (t_i - t_{i-1}) = TE(t_D)_{ref} * (t_{korr})$$

und damit ist

$$t_{korr}(t_i) = \frac{(T(t_i)_{ist} - T(t_i)_{ref}) * (t_i - t_{i-1})}{TE(t_D)_{ref}}$$

und nach (3)

$$t_{korr}(t_i) = (T(t_i)_{ist} - T(t_i)_{ref}) * (t_i - t_{i-1}) \tag{4}$$

wobei

$t_i$ einen einzelnen Zeitpunkt für die Messung der Werkzeugtemperatur,
$T(t)$ die Temperatur im Werkzeug
$(.)_{ist}$ · Term bezieht sich auf den jeweils aktuellen Zyklus,
$(.)_{ref}$ · Term bezieht sich auf den Referenzzyklus und
$t_D$ die Temperierdauer im Zyklus

bedeuten.

Für Anwendungen, die durch äußere Gegebenheiten, z.B. eine ungünstige temperiertechnische Auslegung des Werkzeuges, eine übermäßige Trägheit in der Wärmeübertragung von der Schmelze zum Temperiermedium zeigen, wird in (4) ein Faktor K zwischen 0,2 und 1,0 eingeführt, der bei gegebener Notwendigkeit dämpfend auf die errechnete Korrekturzeit $t_{korr}(t_i)$ wirkt. Damit ergibt sich:

$$t_{korr}(t_i) = K * (T(t_i)_{ist} - T(t_i)_{ref}) * (t_i - t_{i-1})$$

Für den Fall $WD(t_i) < 0$ ergibt sich sinngemäß die gleiche Herleitung für $t_{korr}(t_i)$, wobei die Korrekturzeit $t_{korr}(t_i)$ ein negatives Vorzeichen erhält.

In der Anfahrphase erfolgt im ersten Zyklus, zum Zeitpunkt $Z_1$ beginnend, ein Initialimpuls $t_{init}$ mit festgelegter Dauer, um eine erste vollständige Durchspülung des betreffenden Temperierkreislaufes zu erzielen, und beim Erreichen eines definierten Abstandes der mittleren Werkzeugtemperatur zur vorgegebenen Solltemperatur wird im Folgezyklus zum Zeitpunkt $Z_1$ ein Temperierimpuls $t_{ann}$ geringerer zeitlicher Dauer eingeleitet, wobei der Temperierimpuls $t_{ann}$ in allen nachfolgenden Zyklen bis zur erstmaligen Überschreitung der vorgegebenen Solltemperatur eingeleitet wird und ein gedämpftes Annähern der mittleren Werkzeugtemperatur an die gewählte Solltemperatur gewährleistet.

Eine als Sonderfall in der Anfahrphase auftretende Variante besteht darin, daß bei Vorgabe einer Solltemperatur, die unter der gemessenen Isttemperatur liegt, in allen nachfolgenden Zyklen zwischen den Zeitpunkten $Z_1$ und $Z_2$ so lange eine ständige Temperierung erfolgt, bis die gemessene Isttemperatur die vorgegebene Solltemperatur erstmalig unterschreitet. Nach Unterschreitung der Solltemperatur wird die Anfahrphase mit der Einleitung des Kühlmittelimpulses der Dauer $t_{ann}$ zum Zeitpunkt $Z_1$ des auf die erste Unterschreitung folgenden Zyklus fortgesetzt und mit der erneuten Überschreitung der Solltemperatur und der späteren Auswahl des Referenzzyklus beendet.

Nach Überschreitung der vorgegebenen Solltemperatur wird das Werkzeug bzw. der Plastifizierzylinder mittels einer je Zyklus aktualisierten Vorgabe eines errechneten Temperiermittelimpulses und einer vom aktuellen Soll-Istwertvergleich im Zyklus abhängigen Temperierphase innerhalb einer Anzahl von n Zyklen zum thermischen Gleichgewicht geführt. Dazu wird aus der Gesamtdauer der Temperiermittelimpulse einer festgelegten Anzahl unmittelbar vorausgegangener Zyklen das arithmetische Mittel der Kühldauer je Zyklus ermittelt, mit einem Faktor $K_1$, der ein Reagieren auf die praktisch unvermeidbar auftretenden thermischen Störungen auf den Temperaturzustand des Werkzeuges ermöglicht, bewertet und als errechnete Impulsdauer $t_E$ für die Einleitung des Temperiermittels im Folgezyklus zum Zeitpunkt $Z_1$ genutzt. Nach Einleitung des Temperiermittelimpulses der Länge $t_E$ erfolgt im Ergebnis des kontinuierlich durchgeführten Soll-Ist-Vergleiches der Werkzeugtemperatur für die Dauer der jeweiligen Solltemperaturüberschreitung und damit temperaturabhängig spätestens bis zum Zeitpunkt $Z_2$ des aktuellen Zyklus die Einleitung weiterer Temperiermittelimpulse.

Die Zeitdauer dieses Temperierimpulses $t_E$ wird nach der Berechnungsformel

$$t_E = \frac{K1\,(j)}{n} * \sum_{i=1}^{n} (t_{Ei} + t_{Vi}) \qquad (5)$$

ermittelt wobei,

n        die vorgegebene Mindestanzahl von aufeinanderfolgenden Zyklen nach erstmaliger Überschreitung der vorgegebenen Werkzeugsolltemperatur zur Findung des thermischen Gleichgewichtes,

$t_{Ei}$        der für den Zyklus i der n Zyklen errechnete Temperierimpuls,

$t_{Vi}$        die Summe der temperaturabhängigen Temperierimpulse des Zyklus i der n Zyklen,

j        die Zykluszahl nach der erstmaligen Überschreitung der vorgegebenen Solltemperatur und

K1 (j)        die von j abhängige maschinen- und verfahrensabhängige Größe, die zur Bewertung der mittleren Temperierzeit aus den n Zyklen dient

bedeuten.

Für die Berechnung gelten folgende Anfangsbedingungen ab Zyklus 1 nach der erstmaligen Solltemperaturüberschreitung:

(*)        $t_{E1} = t_{ann}$

(**)        Die Berechnung von (5) erfolgt für $j < n$ , indem n durch j ersetzt wird.

(***)     $K1(j) = a_0 + a_1 * j$     für $j < n$
          $K1(j) = 1$     für $j = n$

Ist die vorgegebene Anzahl von n Zyklen nach erstmaliger Überschreitung der vorgegebenen Solltemperatur erreicht, wird zum Zeitpunkt $Z_1$ des Referenzzyklus ein Temperierimpuls der Dauer $t_D$ ausgelöst, wobei $t_D$ gleich dem im n-ten Zyklus nach (5) errechneten Wert $t_E$ ist, und der Wert $WRG_{ref}(Z_1,t_D)$ berechnet.

Im Folgezyklus erfolgt wiederum eine Temperierung der Dauer $t_D$ und eine Berechnung des beschriebenen Temperaturintegrales. Ist die Differenz beider Integrale kleiner als ein vorgegebener Wert $W_G$, so wird der zuletzt gefahrene Zyklus als Referenzzyklus gekennzeichnet, der zeitliche Temperaturverlauf im Werkzeug in geeigneter Weise festgehalten und die Anfahrphase gilt als abgeschlossen. Für $W_G$ wird ein Wert zwischen 0,1 und 5 %, vorzugsweise von 2 %, des als Referenz berechneten Integrals $WRG(Z_1,t_D)$ vorgegeben. Ist die Differenz beider Integrale größer als dieser vorgegebene Wert $W_G$, werden mit $j = 1$ beginnend erneut n Zyklen nach dem beschriebenen Modus zur Referenzfindung gefahren, wobei für n vorzugsweise drei und $K1(j) = 0,75$ gewählt werden, wobei in diesen drei Zyklen wieder aus dem Soll-Ist-Vergleich resultierende Temperierimpulse ausgelöst werden können. Nach jedem der drei Zyklen wird die Temperierdauer $t_E$ für den Folgezyklus gemäß (5) berechnet. Nach dem 3. Zyklus wird $K1(j) = 1$ und $t_D = t_E$ gesetzt, der Temperierimpuls der Dauer $t_D$ ausgelöst und das Integral $WRG(Z_1,t_D)$ berechnet. Temperierimpuls und Integralberechnung werden im Folgezyklus gleichfalls durchgeführt, die Integralwerte mit dem Vorgängerzyklus verglichen und die beschriebene Referenzauswahl wird, gegebenenfalls mit $j = 1$ beginnend, wiederholt, bis die Bedingung

$$WRG_{j-1}(Z_1, t_D) - WRG_j(Z_1, t_D) < W_G$$

erfüllt ist. Der aktuelle Zyklus wird als Referenzzyklus gekennzeichnet und die Anfahrphase abgeschlossen.

Bereits vor dem ersten Maschinenzyklus kann eine Zusatzheizung zugeschaltet werden, die in den für den thermischen Betriebszustand relevanten Temperierkreisen bzw. in den für den thermischen Betriebszustand der zu plastifizierenden Masse wichtigen Zylinderzonen die Zeitdauer der Erwärmung auf das angestrebte thermische Niveau minimiert. Bei Nutzung der Zusatzheizung wird diese in einem vorgegebenen Abstand der Werkzeug- bzw. Zylindertemperatur zur vorgegebenen Solltemperatur abgeschaltet.

Hinsichtlich der Signale aus der Maschinenablaufsteuerung, die für die Zeitpunkte $Z_1$ und $Z_2$ herangezogen werden, gibt es für die Werkzeugtemperierung z.B. folgende Möglichkeiten.

Als Zeitpunkt $Z_1$ wird der Beginn der Nachdruckzeit und als $Z_2$ das Ende der Werkzeugöffnungsbewegung gewählt oder als Zeitpunkt $Z_1$ der Beginn des Einspritzvorganges und als $Z_2$ das Ende der Werkzeugöffnungsbewegung oder der Zeitpunkt $Z_1$ und der Zeitpunkt $Z_2$ werden durch die gleichen Signale der Maschinenablaufsteuerung festgelegt, wobei in diesem Fall $Z_2$ mit dem Signal $Z_1$ des Folgezyklus identisch ist. Dieser letztere Fall wird vorzugsweise bei relativ niedrig gewünschtem Temperaturzustand des Werkzeuges angewandt.

Bei der Zylindertemperierung wird als Zeitpunkt $Z_1$ z.B. der Plastifizierbeginn festgelegt, für den Zeitpunkt $Z_2$ bieten sich die gleichen Varianten wie bei der Werkzeugtemperierung an.

Die folgenden Ausführungen beziehen sich auf die Varianten, bei denen die Rücklauftemperatur des Temperiermediums gemessen wird.

Als die für den Wärmeinhalt des Werkzeuges in Abhängigkeit von einem Zeitintervall im Zyklus relevante Größe wird WRG ($u_1$, $u_2$) (die dem Wärmeinhalt Relevante Größe) gemäß (1') eingeführt.

$$WRG\,(u_1, u_2) = \int_{u_1}^{u_2} (T_{rück}(t) - T_{vor}(t)\,)\,dt \qquad (1')$$

$WRG(u_1, u_2)$ wird analog zum Integral der Temperaturkurve über der Zeitachse zwischen den Zeitpunkten $u_1$ und $u_2$, verringert um das Integral über dem Temperaturverlauf des Temperiermedienvorlaufs im gleichen Zeitintervall, definiert und berechnet, wobei $T_{rück}(t)$ den Temperaturverlauf im Rücklauf, $T_{vor}(t)$ den Temperaturverlauf im Vorlauf des Temperiermediums und $u_1$ und $u_2$ die Intervallgrenzen des Zeitintervalls bedeuten.

Die mögliche Dauer der Wärmeabfuhr aus dem Werkzeug zwischen den Zeitpunkten $Z_1$, festgelegt durch ein Signal der Maschinenablaufsteuerung in zeitlicher Nähe des Einspritzvorganges bei der Werkzeugtemperierung bzw. in zeitlicher Nähe des Plastifizierbeginns bei der Zylindertemperierung, und $Z_2$, festgelegt durch ein Signal der Maschinenablaufsteuerung in zeitlicher Nähe des Zyklusendes, wird von Null (maximale Wärmeabfuhr) bis 100 (minimale Wärmeabfuhr) prozentual, aber umgekehrt proportional, auf die mögliche Temperierdauer bezogen, eingeteilt. Der Bediener gibt die gewünschte Dauer der Wärmeabfuhr prozentual auf die getroffene Einteilung bezogen, d.h. als relativierte Temperierdauer, an. In einem als Referenzzyklus gekennzeichneten ersten Zyklus nach Erreichen des thermischen Gleichgewichtes des Werkzeuges wird die, aus der vorgegebenen relativierten Temperierdauer $t_d$, resultierende Größe $WRG_{ref}(Z_1, t_d)$ wie folgt errechnet.

$$WRG_{ref}(Z_1, t_d) = \int_{Z_1}^{t_d} \left( T_{rück}(t) - T_{vor}(t) \right) dt$$

In allen Folgezyklen wird zum Zeitpunkt $Z_1$ des jeweiligen Zyklus der Temperierimpuls der Dauer $t_d$ gestartet, wobei $t_d$ als Gegenstand eines noch zu beschreibenden Korrekturverfahrens im Verlauf des jeweiligen Zyklus und bei auftretenden Abweichungen des Temperaturverlaufes zum Temperaturverlauf des sogenannten Refernzzyklus korrigiert wird. Dazu wird jeder Folgezyklus beginnend vom Zeitpunkt $Z_1$ bis zum Ende der relativierten Temperierdauer $t_d$ in kleinste Zeitintervalle $(t_{i-1}, t_i)$ unterteilt, in jedem Zeitpunkt $t_i$ die Medienvorlauf- und die Medienrücklauftemperatur gemessen und der Wert $WRG_{ist}(t_{i-1}, t_i)$ gemäß folgender Berechnungsformel berechnet:

$$WRG_{ist}(t_{i-1}, t_i) = \int_{t_{i-1}}^{t_i} \left( T_{rück}(t) - T_{vor}(t) \right) dt$$

$WRG_{ist}(t_{i-1}, t_i)$ wird permanent für jeden Zeitpunkt $t_i$ und bis zum Ablauf der relativierten Temperierdauer $t_d$ mit dem Wert $WRG_{ref}(t_{i-1}, t_i)$ des Referenzzyklus und immer zum zyklisch gleichen Zeitpunkt gemäß (2') verglichen:

$$WD(t_i) = WRG_{ist}(t_{i-1}, t_i) - WRG_{ref}(t_{i-1}, t_i) \tag{2'}$$

Die Differenz beider Wertgrößen signalisiert eine Differenz der aus dem Werkzeug in diesem Zeitintervall $(t_{i-1}, t_i)$ abgeführten Wärmemenge und wird verfahrensgemäß für eine Korrektur der relativierten Temperierdauer $t_d$ um die Korrekturzeit $t_{korr}(t_i)$ im laufenden Zyklus genutzt.

Dabei gilt für die Ergebnisse von (2') folgende Fallunterscheidung:

$WD(t_i) > 0$: im Vergleich zum zyklisch gleichen Zeitintervall des Referenzzyklus ist der Wärmeinhalt des Werkzeuges im Istzyklus höher, die Dauer der Temperierung muß um den Wert $t_{korr}(t_i)$ verlängert werden.

$WD(t_i) < 0$: im Vergleich zum zyklisch gleichen Zeitintervall des Referenzzyklus ist der Wärmeinhalt des Werkzeuges im Istzyklus geringer, die Dauer der Temperierung muß um den Wert $t_{korr}(t_i)$ verkürzt werden.

$WD(t_i) = 0$: eine Korrektur der Temperierdauer ist nicht notwendig

Zur wertmäßigen Berechnung von $t_{korr}(t_i)$ wird von folgenden Überlegungen ausgegangen:
Ohne Beschränkung der Allgemeinheit gelte der Fall $WD(t_i) > 0$. Die zur Abfuhr des gemäß (2') errechneten wärmemengenproportionalen Überschußbetrages notwendige Zeit $t_{korr}(t_i)$ wird zum Zeitpunkt $t_i$ zur vorgegebenen relativierten Temperierdauer $t_d$ addiert.
Es gilt

$$t_d = t_d + t_{korr}(t_i),$$

wobei $t_{korr}$ aus folgender Beziehung herzuleiten ist:

$$WD(t_i) = WRG_{ref}(t_d, t_d + t_{korr}),$$

damit gilt

$$WRG_{ist}(t_{i-1}, t_i) - WRG_{ref}(t_{i-1}, t_i) = WRG_{ref}(t_d, t_d + t_{korr}) \text{ und}$$

$$\int_{t_{i-1}}^{t_i} (T_{rück}(t) - T_{vor}(t))_{ist} dt - \int_{t_{i-1}}^{t_i} (T_{rück}(t) - T_{vor}(t))_{ref} dt = \int_{t_d}^{t_d + t_{korr}} (T_{rück}(t) - T_{vor}(t))_{ref} dt$$

Nach Einsetzen der Zeitwerte und unter der Voraussetzung, daß die Länge des Zeitintervalles gegen Null und damit die Werte $T(t_{i-1})$ gegen die Werte $T(t_i)$ gehen, ergibt sich

$$(T_{rück}(t_i) - T_{vor}(t_i))_{ist} * (t_i - t_{i-1}) - (T_{rück}(t_i) - T_{vor}(t_i))_{ref} * (t_i - t_{i-1})$$

$$= (T(t_d) - T_{vor}(t_d))_{ref} * (t_d + t_{korr} - t_d)$$

$$((T_{rück}(t_i) - T_{vor}(t_i))_{ist} - (T_{rück}(t_i) - T_{vor}(t_i))_{ref}) * (t_i - t_{i-1}) = (T(t_d) - T_{vor}(t_d))_{ref} * (t_{korr})$$

und damit ist

$$t_{korr} = \frac{((T_{rück}(t_i) - T_{vor}(t_i))_{ist} - (T_{rück}(t_i) - T_{vor}(t_i))_{ref}) * (t_i - t_{i-1})}{(T(t_d) - T_{vor}(t_d))_{ref}}$$

wobei

| | |
|---|---|
| $t_i$ | einen einzelnen Zeitpunkt für die Messung der Rücklauftemperatur, |
| $T_{rück}(t)$ | die Temperatur im Medienrücklauf, |
| $T_{vor}(t)$ | die Temperatur im Medienvorlauf, |
| $(.)_{ist}$ | · Term bezieht sich auf den jeweils aktuellen Zyklus, |
| $(.)_{ref}$ | · Term bezieht sich auf den Referenzzyklus und |
| $t_d$ | die Temperierdauer im Zyklus |

bedeuten.

Für Anwendungen, die durch äußere Gegebenheiten, z.B. eine ungünstige temperiertechnische Auslegung des Werkzeuges, eine übermäßige Trägheit in der Wärmeübertragung von der Schmelze zum Temperiermedium zeigen, wird in (3') ein Faktor K zwischen 0,5 und 1,5 eingeführt, der bei gegebener Notwendigkeit dämpfend bzw. verstärkend auf die errechnete Korrekturzeit $t_{korr}(t_i)$ wirkt. Damit ergibt sich:

$$t_{korr} = K * \frac{((T_{rück}(t_i) - T_{vor}(t_i))_{ist} - (T_{rück}(t_i) - T_{vor}(t_i))_{ref}) * (t_i - t_{i-1})}{(T(t_d) - T_{vor}(t_d))_{ref}} \tag{3'}$$

Für den Fall $WD(t_i) > 0$ ergibt sich sinngemäß die gleiche Herleitung für $t_{korr}(t_i)$, wobei die Korrekturzeit $t_{korr}(t_i)$ ein negatives Vorzeichen erhält.
Der eigentliche Temperierprozeß wird in zwei Phasen, eine Anfahrphase und eine stationäre Betriebsphase, mit jeweils unterschiedlichen Temperierbedingungen getrennt, wobei die Anfahrphase nach der Auswahl des Referenzzyklus beendet ist. Temperierimpulse werden immer zum Zeitpunkt $Z_1$, in zeitlicher Nähe des Einspritzvorganges bzw. Plastifiziervorganges, dem jeweiligen Beginn der Schneckenrotation, eingeleitet, um im Zeitbereich der größten Temperaturdifferenz zwischen eingespritzter Schmelze bzw. plastifizierter Masse und Temperierkanal die erforderliche Wärmeableitung zu bewirken. Dabei wird die Impulsdauer während der Anfahrphase vom Anfahrmodus bestimmt, währenddessen sie in der stationären Betriebsphase als relativierte Temperierdauer vorgegeben wird und im Ergebnis des oben beschriebenen Korrekturverfahrens ständig an die Erfordernisse des Fertigungsprozesses angepaßt wird. Spätestens mit dem Zeitpunkt $Z_2$ wird jede mögliche Temperierung im Zyklus beendet.

Bereits vor dem ersten Maschinenzyklus ermöglicht das erfindungsgemäße Verfahren, daß eine Zusatzheizung zugeschaltet werden kann, die in den für den thermischen Betriebszustand relevanten Temperierkreisen bzw. in den für den thermischen Betriebszustand der zu plastifizierenden Masse wichtigen Zylinderzonen die Zeitdauer der Erwärmung auf das angestrebte thermische Niveau minimiert. Bei Nutzung der Zusatzheizung wird diese nach einer vorgegebenen Anhebung der Rücklauftemperatur nach einem Temperierimpuls festgelegter Dauer abgeschaltet.

In der Anfahrphase erfolgt im ersten Zyklus, zum Zeitpunkt $Z_1$ beginnend, eine Initialtemperierung mit einem Temperierimpuls $t_{init}$ mit festgelegter Dauer, um eine erste vollständige Durchspülung des betreffenden Temperierkreislaufes zu erzielen. In den Folgezyklen wird die vorgegebene relativierte Dauer $t_d$ in Abhängigkeit von dem im Werkzeug gewünschten thermischen Niveau in Anfahrimpulse aufgeteilt, deren Dauer aus $t_d$ ermittelt wird.

$$t_{d-anf} = j * \frac{t_d}{m},$$

wobei j von 1 bis m läuft und
und günstigerweise m = 5 gilt für ein gewünschtes relativ niedriges thermisches Niveau und m = 10 für ein gewünschtes relativ hohes thermisches Niveau. Ist der vorgegebene Wert der relativierten Temperierdauer erreicht, wird für diesen Zyklus erstmals das beschriebene Integral $WRG(Z_1,t_d)$ über den Temperaturverlauf errechnet. Der Folgezyklus wird als Referenzzyklus gekennzeichnet, es erfolgt eine Temperierung der vorgegebenen relativierten Dauer und wiederum eine Berechnung des beschriebenen Temperaturintegrales. Ist die Differenz beider Integrale kleiner als ein vorgegebener Wert $W_G$, wird der zuletzt gefahrene Zyklus als Referenzzyklus anerkannt, der zeitliche Temperaturverlauf in Medienvorlauf und Medienrücklauf in geeigneter Weise festgehalten und die Anfahrphase gilt als abgeschlossen. Für $W_G$ wird ein Wert zwischen 1 und 20 %, vorzugsweise von 10 %, des als Referenz berechneten Integrals $WRG(Z_1,t_d)$ vorgegeben. Ist die Differenz beider Integrale größer als dieser vorgegebene Wert $W_G$, erfolgt erneut eine Temperierung der vorgegebenen relativierten Dauer und ein Vergleich mit dem errechneten Wert $WRG(Z_1,t_d)$ des Vorgängerzyklus. Diese Folge von Temperierung und Integralvergleich wird für jeden folgenden Zyklus bis zur Unterschreitung des Vorgabewertes $W_G$ und der damit verbundenen Kennzeichnung des aktuellen Zyklus als Referenzzyklus und Abschluß der Anfahrphase fortgesetzt. Der Referenzzyklus ist der Folgezyklus nach dem Erreichen des thermischen Gleichgewichts der zu temperierenden Einheit, wie z.B. des Zylinders oder des Werkzeuges. Wie ausführlich beschrieben, wird dieser Gleichgewichtszustand durch die genannten Verfahrensschritte der Anfahrphase erreicht. Es ist jedoch auch denkbar, daß der thermische Gleichgewichtszustand auf eine andere Art und Weise erlangt werden kann. Hinsichtlich der Signale aus der Maschinenablaufsteuerung, die für die Zeitpunkte $Z_1$ und $Z_2$ herangezogen werden, gibt es für die Werkzeugtemperierung z.B. folgende Möglichkeiten.

Als Zeitpunkt $Z_1$ wird der Beginn der Nachdruckzeit und als $Z_2$ das Ende der Werkzeugöffnungsbewegung gewählt oder als Zeitpunkt $Z_1$ der Beginn des Einspritzvorganges und als $Z_2$ das Ende der Werkzeugöffnungsbewegung oder der Zeitpunkt $Z_1$ und der Zeitpunkt $Z_2$ werden durch die gleichen Signale der Maschinenablaufsteuerung festgelegt, wobei in diesem Fall $Z_2$ mit dem Signal $Z_1$ des Folgezyklus identisch ist. Dieser letztere Fall wird vorzugsweise bei relativ niedrig gewünschtem Temperaturzustand des Werkzeuges angewandt.

Bei der Zylindertemperierung wird als Zeitpunkt $Z_1$ z.B. der Plastifizierbeginn festgelegt, für den Zeitpunkt $Z_2$ bieten sich die gleichen Varianten wie bei der Werkzeugtemperierung an.

Durch das erfindungsgemäße Temperierverfahren wird die Prozeßstabilität beim Spritzgießen wesentlich erhöht. Die Ausschußquote kann gegenüber der konventionellen Temperiermethode um ca. 30 % gesenkt werden. Zykluszeitverkürzungen von ca. 5 % führen zu einer beachtlichen Produktivitätssteigerung. Externe Temperiergeräte mit Heizung und Umwälzpumpen werden nur benötigt, wenn hohe Temperiermedientemperaturen erforderlich sind. Infolgedessen verringert sich der spezifische Energieverbrauch des Spritzgießprozesses um ca. 10 %.

Durch die Temperierung ausgehend von der Messung der Vorlauf- und Rücklauftemperatur tritt noch der zusätzliche Vorteile ein, daß eine Einbringung von Thermosensoren in die Zylinderwand bzw. das Spritzgießwerkzeug entfallen kann. Insbesondere bei komplizierten Spritzgießwerkzeugen ist die Einbringung der Bohrungen für die Thermosensoren mit einem erheblichen Kostenaufwand verbunden.

Ein weiterer Vorteil besteht z.B. auch darin, daß bei Spritzgießmaschinen die Temperierung sowohl des Zylinders als auch des Spritzgießwerkzeuges nach dem erfindungsgemäßen Verfahren erfolgen kann. Beide Prozessabläufe können somit in ein gemeinsames Steuergerät eingebunden werden, wodurch sich der gerätetechnische Aufwand wesentlich verringert.

Die Erfindung soll nachfolgend näher erläutert werden. In der zugehörigen Zeichnung zeigen

Fig. 1     ein Funktionsschaltbild für die Temperierung eines Spritzgießwerkzeuges mit Rücklauftemperaturmessung und

Fig. 2     ein Funktionsschaltbild für die Temperierung des Zylinders einer Spritzgießmaschine mit Rücklauftemperaturmessung.

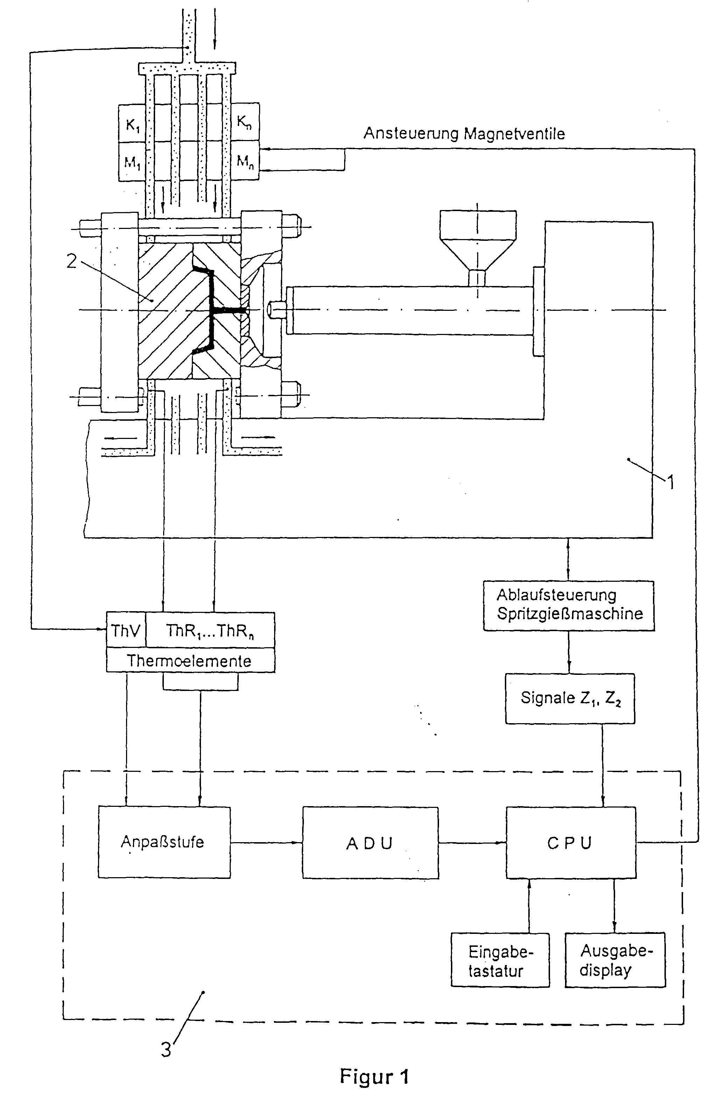

In dem Funktionsschaltbild gemäß Fig. 1 ist eine Spritzgießmaschine 1 mit einem Spritzgießwerkzeug 2 dargestellt. Die Temperierung des Spritzgießwerkzeuges 2 erfolgt über Temperiermedienkreisläufe $K_1$ bis $K_n$, wobei der Durchfluß des Temperiermediums für jeden Temperiermedienkreislauf mittels der Magnetventile $M_1$ bis $M_n$ unterbrochen oder freigegeben werden kann.

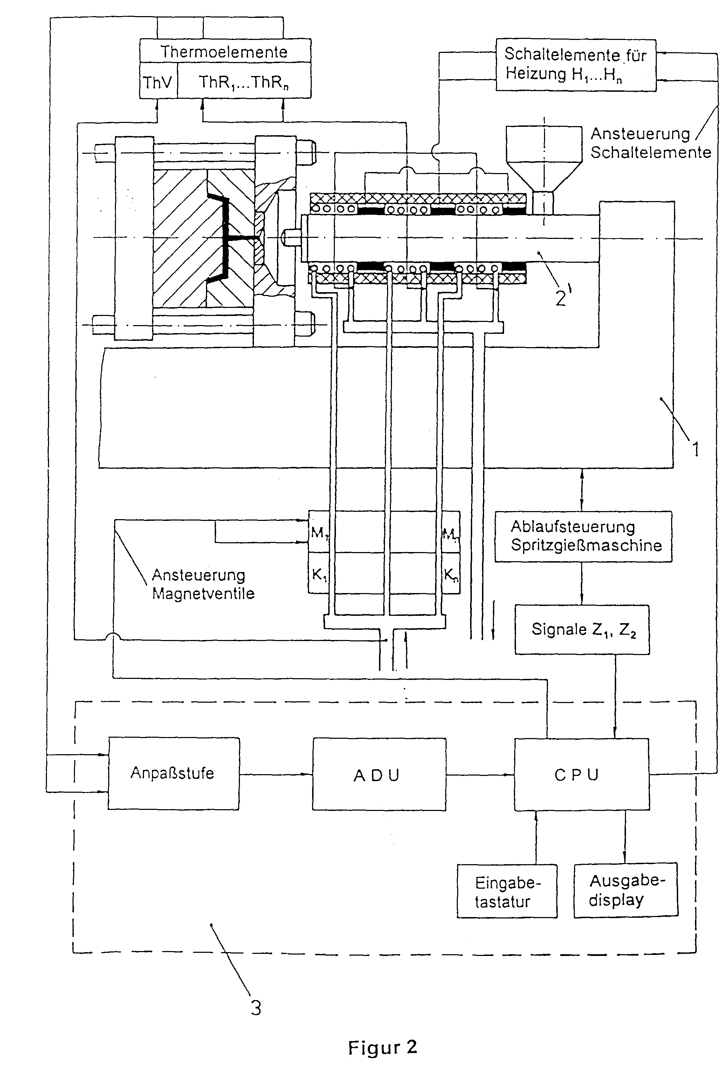

In dem Funktionsschaltbild gemäß Fig. 2 ist eine Spritzgießmaschine 1 einschließlich Plastifizierzylinder 2', dargestellt. Die Temperierung des Plastifizierzylinders 2' erfolgt über Temperierkreisläufe $K_1$ bis $K_n$, wobei der Durchfluß des Temperiermediums für jeden Temperierkreislauf mittels der Magnetventile $M_1$ bis $M_n$ unterbrochen oder freigegeben werden kann. Der thermische Betriebszustand der Zylinderzonen, die den Temperierkreisen $K_1$ bis $K_n$ zugeordnet werden, können durch die Heizkreise $H_1$ bis $H_n$ auf ein vorgegebenes Temperaturniveau angehoben werden, bei ausschließlicher Nutzung der Plastifizierabwärme kann auf die Zusatzheizung verzichtet werden.

Das erfindungsgemäß arbeitende Steuergerät 3 zur Werkzeug- bzw. Plastifizierzylindertemperierung besteht aus den Baugruppen Anpaßstufe, Analog-Digitalwandler (ADU), Recheneinheit (CPU), Eingabeeinheit, Ausgabeeinheit und verschiedenen Schnittstellen. Die funktionelle Einbindung der einzelnen Baugruppen in dieses Gerät und damit in das System Spritzgieß- bzw. Plastifiziervorgang, Temperaturmessung und Anpassung des Temperiermedienstromes ist folgende:

Je Temperierkreislauf $K_i$ (i=1,...,n) des Spritzgießwerkzeuges bzw. des Plastifizierzylinders ist im Temperiermedienrücklauf in Werkzeug- bzw. Zylindernähe ein Thermosensor $ThR_i$ (i=1,...,n) eingebracht, der flexibel mit der Anpaßstufe des Steuergerätes verbunden ist; zusätzlich wird ein Thermosensor ThV in den Temperiermedienvorlauf eingebracht.

Durch die Anpaßstufe werden die anliegenden thermischen Signale entsprechend der gewählten Sensoren und Übertragungsmaterialien an den angeschlossenen Analog-Digital-Umwandler (ADU) angepaßt. Dieser übermittelt die empfangenen thermischen Signale als elektrische Signale an eine Recheneinheit (CPU), auf der sie verarbeitet werden. Dabei bestimmt die auf der CPU installierte Software, ausgehend vom Integral über dem Temperaturverlauf in einem ausgewählten Referenzzyklus, vom zyklussynchron gemessenen Temperaturverlauf in jedem Folgezyklus und des darüber berechneten Vergleichsintegrales, die Durchflußdauer des Temperiermediums im jeweiligen Temperierkreislauf.

Beginn und Ende des Temperiermediendurchflusses legt die CPU durch Ausgabe von Schaltsignalen an das Magnetventil des jeweiligen Temperierkreises fest. Die Zuordenbarkeit von Meßwerten, Rechenergebnissen und Temperierkreisen ist gewährleistet.

An die CPU gleichfalls angeschlossen sind eine Eingabeeinheit zur Eingabe der Stellgrößen und eine Ausgabeeinheit für die Bedienerführung. In die CPU eingeleitete Signale $Z_1$ und $Z_2$ aus der Ablaufsteuerung der Spritzgießmaschine liefern die zeitlichen Bezüge zum Spritzgießprozeß.

Die Funktionsschaltbilder für die Varianten der Temperaturmessung im Spritzgießwerkzeug bzw. in der Zylinderwand des Spritzgießmaschinenzylinders weisen grundsätzlich den gleichen Aufbau auf, lediglich mit dem Unterschied, daß die Thermoelemente nicht im Medienrücklauf sondern in der Zylinderwand bzw. im Spritzgießwerkzeug angeordnet sind. Der Meßort sollte möglichst im Bereich der geometrischen Mitte zwischen Formkontur und Kühlkanal bzw. -fläche und im Bereich der Mitte zwischen Temperiermitteleingang und Temperiermittelausgang angeordnet sein.

Im folgenden werden einige Beispiele für das erfindungsgemäße Verfahren angegeben. Die Beispiele 1 bis 3 beziehen sich auf die Variante zur Messung der Rücklauftemperatur des Temperiermediums und die Beispiele 4 bis 6 auf die Variante zur Messung der Werkzeugtemperatur bzw. der Zylinderwandtemperatur.

Beispiel 1

Auf einer Spritzgießmaschine vom Typ Krauss Maffei 150-620 B wird ein Automobilteil "Motorentlüftung" aus Polyamid 6.6 hergestellt. Die verfahrenstechnischen Parameter sind folgende:

- Werkzeugauslegung:        2-fach
- Masse eines Schusses (2 Formteile + Anguß):        204 g
- Werkzeugmasse:        850 kg
- Spritzdruck:        920 bar

- Einspritzzeit: 1,8 s
- Schließkraft: 1300 kN
- Nachdruck: 750 bar
- Nachdruckzeit: 5,5 s
- Vorlauftemperatur: 37° C
- Zykluszeit: 33 s

Das Spritzgießwerkzeug ist mit vier Temperierkreisläufen ausgerüstet, Temperaturfühler im Rücklauf eines jedes Temperierkreislaufes und ein Fühler im Temperiermedienvorlauf sind mit der Steuereinheit gekoppelt. Als Zeitpunkt $Z_1$ wird "Beginn Nachdruck", als $Z_2$ das "Ende der Werkzeugsöffnungsbewegung" gewählt. Die Zeitdauer zwischen $Z_1$ und $Z_2$ beträgt 22 s.

Als relativierte Temperierdauer $t_d$ werden für die Temperierkreise 1 und 2 (Düsenseite) 50 % , d.h. 11 s, und für die Temperierkreise 3 und 4 (Fahrseite) 40 %, d.h. 13,2 s, vorgegeben.

Die Medienrücklauftemperaturen der betreffenden Temperierkreisläufe werden unmittelbar im Ausgang aus dem Werkzeug gemessen.

Die Temperaturmessungen in Rücklauf und Vorlauf erfolgen kontinuierlich über die gesamte Zyklusdauer.

Am Beispiel des Temperierkreises 1 soll die Arbeitsweise des Verfahren erläutert werden.

In der Anfahrphase erfolgt im ersten Zyklus, zum Zeitpunkt $Z_1$ beginnend, eine Initialimpuls $t_{init}$ mit festgelegter Dauer, um eine erste vollständige Durchspülung des betreffenden Temperierkreislaufes zu erzielen. Die Dauer des Initialimpulses $t_{init}$ wird empirisch aus vorliegenden Erfahrungswerten festgelegt, wobei für dieses Beispiel 5 Sekunden als ausreichend angesehen werden. Für die folgenden m Zyklen wird jeweils ein Anfahrimpuls wie folgt ermittelt:

$$t_{d\text{ - }anf} = j * \frac{t_d}{m}$$

Diese Berechnung erfolgt kühlkreisabhängig, wobei m = 5 gewählt wird. Für den Kreis 1 ergeben sich für die Zyklen 2 bis 6 folgende Temperierimpulse: 2,2 s, 4,4 s, 6,6 s, 8,8 s, 11 s.

Ist der vorgegebene Wert der relativierten Temperierdauer, also 50 % bzw. 11 s, erreicht, wird für diesen Zyklus erstmals das beschriebene Integral $WRG(Z_1,t_d)$ über den Temperaturverlauf errechnet, $WRG(Z_1,t_d)=27,5$ . Der Folgezyklus wird als Referenzzyklus gekennzeichnet, es erfolgt eine Temperierung der vorgegebenen 11 s und wiederum eine Berechnung des beschriebenen Temperaturintegrales, $WRG(Z_1,t_d)=28,3$. Die Differenz beider Integrale (0,8) ist kleiner als ein vorgegebener Wert $W_G$ (2,75), das bedeutet, der zuletzt gefahrene Zyklus wird als Referenzzyklus anerkannt, der zeitliche Temperaturverlauf des Medienvor- und Medienrücklaufes gespeichert und die Anfahrphase gilt als abgeschlossen.

In allen Folgezyklen wird zum Zeitpunkt $Z_1$ des jeweiligen Zyklus der Temperierimpuls der Dauer $t_d$ gestartet, wobei $t_d$ (11 s) unter Anwendung des Korrekturverfahrens im Verlauf des jeweiligen Zyklus und bei auftretenden Abweichungen des Temperaturverlaufes zum Temperaturverlauf des sogenannten Refernzzyklus korrigiert wird. Dazu wird jeder Folgezyklus beginnend vom Zeitpunkt $Z_1$ bis zum Ende der relativierten Temperierdauer $t_d$ in kleinste Zeitintervalle $(t_{i-1},t_i)$ der Dauer 0,05 s unterteilt, in jedem Zeitpunkt $t_i$ die Medienrücklauftemperatur gemessen und der Wert $WRG_{ist}(t_{i-1},t_i)$ gemäß (1) berechnet:

$$WRG_{ist}(t_{i-1},t_i) = \int_{t_{i-1}}^{t_i} ( T_{rück}(t) - T_{vor}(t) )\, dt$$

$WRG_{ist}(t_{i-1},t_i)$ wird permanent für jeden Zeitpunkt $t_i$ und bis zum Ablauf der relativierten Temperierdauer $t_d$ mit dem Wert $WRG_{ref}(t_{i-1},t_i)$ des Referenzzyklus und immer zum zyklisch gleichen Zeitpunkt gemäß (2) verglichen. Die Differenz $WD(t_i)$ beider Wertgrößen wird verfahrensgemäß für eine Korrektur der relativierten Temperierdauer $t_d$ um die Korrekturzeit $t_{korr}(t_i)$ im laufenden Zyklus genutzt.

$$WD(t_i) = WRG_{ist}(t_{i-1},t_i) - WRG_{ref}(t_{i-1},t_i)$$

$$t_{korr} = \frac{K * ((T_{rück}(t_i) - T_{vor}(t_i))_{ist} - (T_{rück}(t_i) - T_{vor}(t_i))_{ref}) * (t_i - t_{i-1})}{(T(t_d) - T_{vor}(t_d))_{ref}}$$

wobei gilt K = 1.

Aus den Meß- und Rechenergebnissen werden beispielhaft die Werte $T_{rück}(t_i)$, $T_{vor}(t_i)$, $WRG_{ist}(t_{i-1}, t_i)$, $W_D(t_i)$, $t_{korr}(t_i)$ und $t_d$ für den 50., 80., 120. und 200. Meßpunkt des 20. Zyklus des Temperierkreislaufes 1 in der nachfolgenden Tabelle angegeben.

| Zeitpunkt | $T_{rück}$ | $T_{vor}$ | $WRG_{ist}$ | WD | $t_{korr}$ | $t_d$ |
|---|---|---|---|---|---|---|
| | in $t_i$ (°C) | in $t_i$ (°C) | in $t_i$ | in $t_i$ | in $t_i$ (s) | in $t_i$ (s) |
| 50 | 41,6 | 37,0 | 0,24 | - 0,01 | - 0,04 | 10,1 |
| 80 | 40,8 | 37,1 | 0,185 | - 0,02 | - 0,04 | 9,4 |
| 120 | 39,7 | 37,0 | 0,135 | 0,005 | 0,01 | 9,7 |
| 200 | 38,1 | 37,0 | 0,06 | 0,01 | 0,02 | 10,6 |

Alle Temperierkreisläufe werden mit Brauchwasser aus dem geschlossenen Kühlwassernetz des Betriebes gespeist, das im Vorlauf eine Temperatur von 37° C aufweist. Der Einsatz eines Temperiergerätes ist nicht erforderlich. Nach der erfindungsgemäßen Verfahrensweise wurden im Dauerbetrieb die eingangs genannten Formteile qualitätsgerecht in einer Zykluszeit von 33 s hergestellt. Die ermittelte Ausschußquote betrug 2,6 % und der spezifische Energieverbrauch lag bei 0,59 kWh/kg.

Beispiel 2

Auf einer Spritzgießmaschine vom Typ Krauss Maffei 250-1200 B wird ein Automobilteil "Abdeckung" aus Polypropylen gefüllt mit 40% Talkum, hergestellt.

Die verfahrenstechnischen Parameter sind folgende:

- Werkzeugauslegung: 1-fach
- Masse eines Schusses (2 Formteile + Anguß): 210 g
- Werkzeugmasse: 770 kg
- Spritzdruck: 800 bar
- Einspritzzeit: 2,0 s
- Schließkraft: 2000 kN
- Nachdruck: 700 bar
- Nachdruckzeit: 3,5 s
- Vorlauftemperatur: 14° C
- Zykluszeit: 26,5 s

Das Spritzgießwerkzeug ist mit vier Temperierkreisläufen ausgerüstet, Temperaturfühler im Rücklauf eines jedes Temperierkreislaufes und ein Fühler im Temperiermedienvorlauf sind mit der Steuereinheit gekoppelt. Als Zeitpunkt $Z_1$ wird "Beginn Nachdruck", als $Z_2$ das "Ende der Werkzeugsöffnungsbewegung" gewählt. Die Zeitdauer zwischen $Z_1$ und $Z_2$ beträgt 19 s.

Als relativierte Temperierdauer $t_d$ werden für die Temperierkreise 1 und 2 (Düsenseite) 70 % ,d.h. 5,7 s, und für die Temperierkreise 3 und 4 (Fahrseite) 65 %, d.h. 6,6 s, vorgegeben.

Die Medienrücklauftemperaturen der betreffenden Temperierkreisläufe werden unmittelbar im Ausgang aus dem Werkzeug gemessen.

Die Temperaturmessungen in Rücklauf und Vorlauf erfolgen kontinuierlich über die gesamte Zyklusdauer.

Der Verfahrensablauf ist analog wie im Beispiel 1, für die Errechnung der Dauer der Anfahrimpulse wird m = 5 gesetzt und die Anfahrphase ist nach 7 Zyklen mit der Auswahl des Referenzzyklus abgeschlossen. Die in den Folgezyklen errechneten Temperierimpulse erreichen unter dem Einfluß praktisch auftretender Störeinflüsse auf den thermischen Betriebszustand des Werkzeuges eine Dauer zwischen 4,2 s und 7,5 s für die Kreise 1 und 2 und zwischen 5,4 s und 8,0 s für die Kreise 3 und 4.

Alle Temperierkreisläufe werden mit Brauchwasser aus dem geschlossenen Kühlwassernetz des Betriebes gespeist, das im Vorlauf eine Temperatur von ca. 14° C aufweist. Der Einsatz eines Temperiergerätes ist nicht erforderlich.

Nach der erfindungsgemäßen Verfahrensweise wurden über einen Produktionstag im Dreischichtbetrieb die eingangs genannten Formteile infolge der erreichten Konstanz des thermischen Betriebszustandes mit optimaler Prozeßstabilität qualitätsgerecht in einer Zykluszeit von 26,5 Sekunden hergestellt. Die ermittelte Ausschußquote betrug 0,85 % und der spezifische Energieverbrauch lag bei 0,55 kWh/kg.

Beispiel 3

Fertigung des Formteiles " Dämpfungspuffer " aus einer Gummimischung auf SBR/NR - Kautschukbasis im Spritzgießverfahren. Die verfahrenstechnischen Parameter sind folgende:

Spritzgießmaschine:
- Schließkraft:         850 kN
- Schneckenkolbendurchmesser:         45 mm
- Schneckendrehzahl:         90 U/min
- Staudruck in Prozent:         35 %
- Zykluszeit:         45 s

Spritzgießform:
- vollautomatisch ausformend
- elektrisch beheizt

Formteil:
- offen, direkt über Angießsystem angespritzt
- Fachzahl:         24
- Schußgewicht (einschl. Anguß):         0.064 kg

Der Plastifizierzylinder ist mit drei Temperierkreisläufen ausgerüstet, die über Thermosensoren im Medienrücklauf und einen Thermosensor im Medienvorlauf mit der Steuereinheit gekoppelt sind. Kreis 1 (Masseeinzug) und Kreis 3 (Düsenbereich) sind mit Zusatzheizungen ausgestattet. Als Zeitpunkt $Z_1$ wird "Plastifizierbeginn", als $Z_2$ das "Ende der Werkzeugsöffnungsbewegung" gewählt. Die Zeitdauer zwischen $Z_1$ und $Z_2$ beträgt 37 s.

Als relativierte Temperierdauer $t_d$ werden für den Temperierkreis 1 (Einzugszone) 90% (3,7 s) festgelegt, d. h. ein relativ hohes Niveau der Friktionswärme soll erhalten bleiben, für die Temperierkreise 2 (Beginn Ausstoßzone) und 3 werden 80 % (7,4 s) vorgegeben. Für den thermischen Betriebszustand des Plastifizierzylinders bedeutet diese Vorgabe einen ansteigenden Wärmeinhalt über den Zylinder in Richtung Ausstoßzone, der aus der in dieser Richtung relativ stark ansteigenden Friktionswärme resultiert. Die Medienrücklauftemperaturen der betreffenden Temperierkreisläufe werden unmittelbar im Ausgang aus dem Zylinder gemessen.

Die Temperaturmessungen in Rücklauf und Vorlauf erfolgen kontinuierlich über die gesamte Zyklusdauer.

In der Anfahrphase wurde bereits nach wenigen Minuten ein solches Niveau des thermischen Betriebszustandes erreicht, daß die Zusatzheizungen abgeschalten werden konnten. Die Anfahrphase ist nach 12 Zyklen abgeschlossen, wobei 3 Zyklen zur Feststellung des Referenzzyklus dienten. Die in den Folgezyklen errechneten Temperierimpulse erreichen unter dem Einfluß praktisch auftretender Störeinflüsse auf den thermischen Betriebszustand des Plastifizierzylinders eine Dauer zwischen 2,0 s und 5,5 s für den Kreis 1 und zwischen 5,4 s und 8,6 s für die Kreise 2 und 3. Alle Temperierkreisläufe werden mit Brauchwasser aus dem geschlossenen Kühlwassernetz des Betriebes gespeist, das im Vorlauf eine Temperatur von ca. 14° C aufweist. Der Einsatz eines Temperiergerätes ist nicht erforderlich.

Nach der erfindungsgemäßen Verfahrensweise wurden im Dauerbetrieb die eingangs genannten Formteile qualitätsgerecht unter folgenden Parametern hergestellt:

- Zykluszeit:         45 s
- Ausschußquote:         2,9 %
- spezifische Energieverbrauch:         0,60 kWh/kg
- zusätzl. Bedienaufwand für Nachstellarbeiten je Schicht:         22 min

Beispiel 4

Auf einer Spritzgießmaschine vom Typ Krauss Maffei 150-620 B wird ein Automobilteil "Motorentlüftung" aus Polyamid 6.6 hergestellt. Die verfahrenstechnischen Parameter sind folgende:

- Werkzeugauslegung:         2-fach
- Masse eines Schusses (2 Formteile + Anguß):         204 g
- Werkzeugmasse:         850 kg

- Spritzdruck: 920 bar
- Einspritzzeit: 1,8 s
- Schließkraft: 1300 kN
- Nachdruck: 750 bar
- Nachdruckzeit: 5,5 s
- Vorlauftemperatur: 37° C
- Zykluszeit: 33 s

Das Spritzgießwerkzeug ist mit vier Temperierkreisläufen ausgerüstet, die über Temperaturfühler mit der Steuereinheit gekoppelt sind. Als Werkzeugsolltemperatur $T_{soll}$ werden für die Temperierkreise 1 und 2 (Düsenseite) 65° C und für die Temperierkreise 3 und 4 (Fahrseite) 55° C vorgegeben.

Die Werkzeugtemperaturen im Bereich der betreffenden Temperierkreisläufe werden in der geometrischen Mitte zwischen Temperierkanal und Formkontur und in der etwaigen Mitte zwischen Temperiermedieneingang und -ausgang des jeweiligen Kreises gemessen.

Am Beispiel des Temperierkreises 1 soll die Art und Weise der Einbringung der sensoraufnehmenden Bohrung beschrieben werden. In der Mitte zwischen Temperiermitteleingang und Temperiermittelausgang wird die Bohrung zwischen zwei zueinander und zur Werkzeugkontur parallel verlaufende Temperierkanäle in der geometrischen Mitte zwischen beiden Kanälen und senkrecht zur Werkzeugkontur eingebracht. Die Bohrung endet im halben Abstand zwischen Temperierkanal und Werkzeugkontur vor der Werkzeugkontur. Die für den Temperierkreis 1 konkreten Maße sind folgende:

- Mittenabstand zwischen beiden Temperierkanälen: 40 mm
- Abstand zwischen Temperierkanalmitte und Kontur: 40 mm
- Abstand zwischen Bohrungsgrund und Kontur: 20 mm.

Die für die Temperaturmessung notwendigen Bohrungen für die Temperierkreise $K_2$, $K_3$ und $K_4$ wurden analog zu Kreis 1 eingebracht.

Die Messungen erfolgen kontinuierlich über die gesamte Zyklusdauer. Als Reaktion auf die gemessenen Werte werden Temperiermittelimpulse begrenzter zeitlicher Dauer in den zugehörigen Kühlkreislauf eingeleitet.

Im ersten Zyklus der Anfahrphase erfolgt, zum Zeitpunkt $Z_1$ ("Beginn Nachdruck") beginnend, einen Temperierimpuls $t_{init}$ festgelegter Dauer, mit der eine erste vollständige Durchspülung des betreffenden Kühlkreises erzielt wird. Die Dauer der Initialimpulses $t_{init}$ wird jeweils empirisch aus vorliegenden Erfahrungswerten festgelegt, wobei für dieses Beispiel 5 Sekunden als ausreichend angesehen werden.

Im Folgezyklus erfolgt bei Erreichen eines definierten Abstandes der gemessenen mittleren Werkzeugtemperatur zu den vorgegebenen Solltemperaturen von 3 K in den jeweiligen Temperierkreisläufen zum Zeitpunkt $Z_1$ ("Beginn Nachdruck") die Einleitung eines Temperierimpulses $t_{ann}$ über eine Zeitdauer von 0,3 Sekunden. Dieser Temperierimpuls von 0,3 Sekunden wird in allen nachfolgenden Zyklen bis zur erstmaligen Überschreitung der vorgegebenen Solltemperatur eingeleitet. Mit Erreichen bzw. Überschreiten der Solltemperatur beginnt die Findung des thermischen Gleichgewichtes im Werkzeug.

Das heißt in den n Zyklen (n = 5) nach erstmaligem Erreichen oder Überschreiten der vorgegebenen Solltemperatur wird zum Zeitpunkt $Z_1$ ein Temperiermittelimpuls $t_E$ eingeleitet, der als Mittelwert aus der Gesamtkühldauer der vorhergehenden fünf Zyklen errechnet und mit einem Faktor K1 bewertet wird, nach der Formel

$$t_E = \frac{K1\,(j)}{n} * \sum_{i=1}^{n} (t_{Ei} + t_{Vi})$$

mit n = 5, wobei für K1(j) gilt:

$$K1(j) = a_0 + a_1 * j \qquad \text{für } j < 6$$
$$K1(j) = 1 \qquad \text{für } j > 5$$

Unter Beachtung der thermischen Trägheit der Wärmeübertragungsvorgänge zu Beginn der stationären Betriebsphase und der daraus häufig resultierenden "Überschwingvorgänge" in der Temperaturregelung wurden für die

Konstanten $a_0$ und $a_1$ folgende Werte gewählt:

$a_0 = 0,25;$  $a_1 = 0,15;$

Für K1(j) ergibt sich ein monoton wachsender Verlauf in Abhängigkeit von j, der gewährleistet, daß erst der nach dem 5. Zyklus nach Überschreitung der Solltemperatur errechnete Impuls die zur Einhaltung der vorgegebenen Solltemperatur notwendige Dauer $t_D$ hat. Die Dauer $t_D$ ist gleich dem für den 6. Zyklus nach (5) errechneten Wert $t_E$, für das Beispiel ist $t_D=12,7$ s.

Die Temperierung im Ergebnis des Soll-Ist-Temperaturvergleiches wird von nun an eingestellt.

Für diesen, im Beispiel 6. Zyklus nach Überschreitung der Solltemperatur, wird erstmals das beschriebene Integral WRG($Z_1,t_D$) über den Temperaturverlauf errechnet, WRG($Z_1,t_D$) = 820,9. Im Folgezyklus erfolgt erneut eine Temperierung der errechneten Dauer $t_D$ und wiederum eine Berechnung des beschriebenen Temperaturintegrales, WRG($Z_1,t_D$) = 826,7. Die Differenz beider Integrale (5,8) ist kleiner als ein vorgegebener Wert $W_G$ ($W_G$ = 16,4), das bedeutet, der zuletzt gefahrene Zyklus wird als Referenzzyklus gekennzeichnet, der im Werkzeug bzw. im Zylinder gemessene zeitliche Temperaturverlauf gespeichert und die Anfahrphase gilt als abgeschlossen. In allen Folgezyklen wird zum Zeitpunkt $Z_1$ des jeweiligen Zyklus der Temperierimpuls der Dauer $t_D$ gestartet, wobei $t_D$ (12,7 s) unter Anwendung des Korrekturverfahrens im Verlauf des jeweiligen Zyklus und bei auftretenden Abweichungen des Temperaturverlaufes zum Temperaturverlauf des sogenannten Referenzzyklus korrigiert wird.

Dazu wird jeder Folgezyklus beginnend vom Zeitpunkt $Z_1$ bis zum Ende der errechneten Temperierdauer $t_D$ in kleinste Zeitintervalle ($t_{i-1},t_i$) der Dauer 0,05 s unterteilt, in jedem Zeitpunkt $t_i$ die Werkzeugtemperatur gemessen und der Wert WRG$_{ist}$($t_{i-1},t_i$) gemäß (1) berechnet.

$$WRG_{ist}(t_{i-1},t_i) \int_{t_{i-1}}^{t_i} = T(t)\, dt$$

WRG$_{ist}$($t_{i-1},t_i$) wird permanent für jeden Zeitpunkt $t_i$ und bis zum Ablauf der Temperierdauer $t_D$ mit dem Wert WRG$_{ref}$($t_{i-1},t_i$) des Referenzzyklus und immer zum zyklisch gleichen Zeitpunkt gemäß (2) verglichen. Die Differenz WD($t_i$) beider Wertgrößen wird verfahrensgemäß für eine Korrektur der Temperierdauer $t_D$ um die Korrekturzeit $t_{korr}$($t_i$) im laufenden Zyklus genutzt.

$$WD(t_i) = WRG_{ist}(t_{i-1},t_i) - WRG_{ref}(t_{i-1},t_i)$$

$$t_{korr}(t_i) = K * (T(t_i)_{ist} - T(t_i)_{ref}) * (t_i - t_{i-1})$$

mit K = 1.

Aus den Meß- und Rechenergebnissen werden beispielhaft die Werte $T(t_i)_{ist}$, WRG$_{ist}$($t_{i-1},t_i$), WD($t_i$), $t_{korr}$($t_i$) und $t_D$ für den 1., 50., 80., 120. und 200. Meßpunkt des 20. Zyklus des Temperierkreislaufes 1 angegeben.

| Zeitpunkt i | $T_{ist}$ in $t_i$ (°C) | $T_{ref}$ in $t_i$ | WRG$_{ref}$ in $t_i$ | $t_{korr}$ in $t_i$ (s) | $t_D$ nach $t_i$ (s) |
|---|---|---|---|---|---|
| 1 | 64,8 | 64,8 | 3,25 | 0,00 | 12,7 |
| 50 | 65,8 | 66,3 | 3,30 | - 0,025 | 12,1 |
| 80 | 66,7 | 66,7 | 3,34 | 0,00 | 11,8 |
| 120 | 66,0 | 66,2 | 3,30 | - 0,01 | 11,6 |
| 200 | 65,4 | 65,2 | 3,25 | 0,01 | 12,0 |

Wie aus dem Beispiel ersichtlich ist, wird der im Referenzzyklus eingeleitete Temperierimpuls von 12,7 s, der im Referenzzyklus notwendig war, um die vorgegebene Solltemperatur zu halten, im Verlaufe des 20. Zyklus von 12,7 über 12,1, 11,8, 11,6 hin zu 12,0 s korrigiert.

Alle Temperierkreisläufe werden mit Brauchwasser aus dem geschlossenen Kühlwassernetz des Betriebes gespeist, das im Vorlauf eine Temperatur von 37° C aufweist. Der Einsatz eines Temperiergerätes ist nicht erforderlich.

Nach der erfindungsgemäßen Verfahrensweise wurden im Dauerbetrieb die eingangs genannten Formteile qualitätsgerecht in einer Zykluszeit von 33 Sekunden hergestellt. Die ermittelte Ausschußquote betrug 2,6 % und der spezifische Energieverbrauch lag bei 0,59 kWh/kg.

Beispiel 5

Auf einer Spritzgießmaschine vom Typ Krauss Maffei 250-1200 B wird ein Automobilteil "Abdeckung" aus Polypropylen gefüllt mit 40% Talkum hergestellt. Die verfahrenstechnischen Parameter sind folgende:

- Werkzeugauslegung: 1-fach
- Masse eines Schusses (2 Formteile + Anguß): 210 g
- Werkzeugmasse: 770 kg
- Spritzdruck: 800 bar
- Einspritzzeit: 2,0 s
- Schließkraft: 2000 kN
- Nachdruck: 700 bar
- Nachdruckzeit: 3,5 s
- Vorlauftemperatur: 14° C
- Zykluszeit: 26,5 s

Das Spritzgießwerkzeug ist mit vier Temperierkreisläufen ausgerüstet, verfahrensgemäß im Werkzeug plazierte Thermofühler im Bereich eines jeden Temperierkreislaufes sind mit der Steuereinheit gekoppelt. Als Zeitpunkt $Z_1$ wird "Beginn Nachdruck", als $Z_2$ das "Ende der Werkzeugsöffnungsbewegung" gewählt. Die Zeitdauer zwischen $Z_1$ und $Z_2$ beträgt 19 s. Als Solltemperaturen werden für die Temperierkreise 1 und 2 (Düsenseite) 55° C und für die Temperierkreise 3 und 4 (Fahrseite) 45° C vorgegeben.

Der Verfahrensablauf ist analog wie im Beispiel 1, die Anfahrphase ist nach 8 Zyklen abgeschlossen.

Die in den Folgezyklen errechneten Temperierimpulse erreichen unter dem Einfluß praktisch auftretender Störeinflüsse auf den thermischen Betriebszustand des Werkzeuges eine Dauer zwischen 4,2 s und 7,5 s für die Kreise 1 und 2 und zwischen 5,4 s und 8,0 s für die Kreise 3 und 4.

Alle Temperierkreisläufe werden mit Brauchwasser aus dem geschlossenen Kühlwassernetz des Betriebes gespeist, das im Vorlauf eine Temperatur von ca. 14° C aufweist. Der Einsatz eines Temperiergerätes ist nicht erforderlich.

Nach der erfindungsgemäßen Verfahrensweise wurden über einen Produktionstag im Dreischichtbetrieb die eingangs genannten Formteile infolge der erreichten Konstanz des thermischen Betriebszustandes mit optimaler Prozeßstabilität qualitätsgerecht in einer Zykluszeit von 26,5 Sekunden hergestellt. Die ermittelte Ausschußquote betrug 0,85 % und der spezifische Energieverbrauch lag bei 0,55 kWh/kg.

Beispiel 6

Fertigung des Formteiles " Dämpfungspuffer " aus einer Gummimischung auf SBR/NR - Kautschukbasis im Spritzgießverfahren. Die verfahrenstechnischen Parameter sind folgende:

Spritzgießmaschine:
- Schließkraft: 850 kN
- Schneckenkolbendurchmesser: 45 mm
- Schneckendrehzahl: 90 U/min
- Staudruck in Prozent: 35 %
- Zykluszeit: 45 s

Spritzgießform:
- vollautomatisch ausformend
- elektrisch beheizt

Formteil:
- offen, direkt über Angießsystem angespritzt
- Fachzahl: 24
- Schußgewicht (einschl. Anguß): 0.064 kg

Der Plastifizierzylinder ist mit drei Temperierkreisläufen ausgerüstet, die über verfahrensgemäß in der Zylinderwand plazierte Thermosensoren mit der Steuereinheit gekoppelt sind. Kreis 1 (Masseeinzug) und Kreis 3 (Düsenbereich) sind mit Zusatzheizungen ausgestattet. Als Zeitpunkt $Z_1$ wird "Plastifizierbeginn", als $Z_2$ das "Ende der Werkzeugsöffnungsbewegung" gewählt. Die Zeitdauer zwischen $Z_1$ und $Z_2$ beträgt 37 s.

| Als Zylindersolltemperaturen $T_{soll}$ werden für | |
|---|---|
| Temperierkreis 1 ( Einzugszone) | 45° C |
| Temperierkreis 2 (Erwärmungs- und Verdichtungszone, Beginn Ausstoßzone) | 52° C |
| Temperierkreis 3 ( Ausstoßzone und Düsenstock) | 60° C |

vorgegeben.

| Die Einschalttemperatur für die Heizung beträgt | $T_{soll}$ - 2,5 K, |
|---|---|
| die Ausschalttemperatur beträgt | $T_{soll}$ - 2,0 K. |

Die Zylindertemperaturen im Bereich der betreffenden Temperierkreisläufe werden in etwa im Masseschwerpunkt der Zylinderwandung, d.h. bei gegebenem Innendurchmesser von 45 mm und gegebenem Zylinderaußendurchmesser von 90 mm, etwa 15 mm von der Außenwand in radialer Richtung und der etwaigen Mitte zwischen Temperiermedieneingang und -ausgang des jeweiligen Kreises gemessen. Die Temperaturmessung erfolgt kontinuierlich über die gesamte Zyklusdauer. In der Anfahrphase wurde bereits nach wenigen Minuten die Ausschalttemperatur der Zusatzheizungen erreicht, von der ab zu den jeweiligen Zeitpunkten $Z_1$ der einzelnen Zyklen Temperierimpulse $t_{ann}$ von 0,3 s eingeleitet wurden, um ein gedämpftes Erreichen von $T_{soll}$ zu bewirken. Nach Erreichen von $T_{soll}$ wurde nach dem 5. Zyklus der erstmaligen Solltemperaturüberschreitung der Referenzzyklus ausgewählt und damit die Anfahrphase beendet.

Die in den Folgezyklen errechneten Temperierimpulse erreichen unter dem Einfluß praktisch auftretender Störeinflüsse auf den thermischen Betriebszustand des Plastifizierzylinders eine Dauer zwischen 2,0 s und 5,5 s für den Kreis 1 und zwischen 5,4 s und 8,6 s für die Kreise 2 und 3.

Alle Temperierkreisläufe werden mit Brauchwasser aus dem geschlossenen Kühlwassernetz des Betriebes gespeist, das im Vorlauf eine Temperatur von ca. 14° C aufweist. Der Einsatz eines Temperiergerätes ist nicht erforderlich.

Nach der erfindungsgemäßen Verfahrensweise wurden im Dauerbetrieb die eingangs genannten Formteile qualitätsgerecht unter folgenden Parametern hergestellt:

| Zykluszeit | 45 s |
|---|---|
| Ausschußquote | 2,9 % |
| spezifische Energieverbrauch | 0,60 kWh/kg |
| zusätzl. Bedienaufwand für Nachstellarbeiten je Schicht | 22 min |

Vergleichsbeispiel 1

Formteile wie in den Beispielen 1 und 4 werden unter Anwendung der konventionellen Temperierung bei folgenden Temperierbedingungen hergestellt:

- Temperiermethode: 2 zweikreisige Beistelltemperiergeräte
- Temperiermedium: Wasser
- Temperiermedientemperatur: 2 x 55° C, 2 x 60° C.

Die erforderliche Zykluszeit betrug dabei 37 Sekunden. Im Dauerbetrieb wurde eine Ausschußquote von 3,1 % erreicht und der spezifische Energieverbrauch lag bei 0,72 kWh/kg.

Vergleichsbeispiel 2

Formteile wie in den Beispielen 2 und 5 werden unter Anwendung der konventionellen Temperierung bei folgenden Temperierbedingungen hergestellt, wobei das Werkzeug mittels zweier Beistelltemperiergeräte temperiert wird:

- Temperiermethode: 2 zweikreisige Beistelltemperiergeräte
- Temperiermedium: Wasser
- Temperiermedientemperatur: 2 x 50° C (düsenseitig), 2 x 45°C (fahrseitig).

Die erforderliche Zykluszeit betrug 29 Sekunden. Im Dauerbetrieb wurde eine Ausschußquote von 2,6 % erreicht und der spezifische Energieverbrauch lag bei 0,69 kWh/kg.

Durch die erfindungsgemäße Verfahrensweise wird gegenüber der konventionellen Temperierung eine deutlich verbesserte Prozeßstabilität erreicht. Neben der Einsparung an Temperiergeräten, in beiden Beispielen sind es je zwei, besteht der wesentliche Vorteil in einer Verkürzung der Zykluszeit. Gemäß den Beispielen liegt diese bei etwa 10 %. Dadurch wird eine erhebliche Produktivitätssteigerung erreicht. Auch die Ausschußquote konnte beträchtlich gesenkt werden. In den Beispielen liegen die erzielten Senkungen der Ausschußquote bei 38 bzw. 67 %. Insgesamt ergibt sich dadurch auch eine Senkung des spezifischen Energieverbrauchs, die zwischen 10 und 20 % liegt.

Vergleichsbeispiel 3

Formteile wie in den Beispielen 3 und 6 werden unter Anwendung der konventionellen Temperierung bei folgenden Temperierbedingungen hergestellt:

- Temperiermethode:　　ein Beistelltemperiergerät, stetige Temperierung über den gesamten Plastifizierzylinder
- Temperiermedium:　　Wasser
- Temperiermedientemperatur:　　75° C

Im Dauerbetrieb wurden die in Beispiel 2 genannten Formteile unter folgenden Parametern hergestellt:

| Zykluszeit: | 52 s |
| Ausschußquote: | 4,2 % |
| spezifischer Energieverbrauch | 0,70 kWh/kg |
| zusätzl. Bedienaufwand für | |
| Nachstellarbeiten je Schicht: | 37 min. |

**Patentansprüche**

1. Verfahren zur Temperierung von Spritzgießmaschineneinheiten (1), insbesondere für die Verarbeitung vernetzbarer Polymere, und Formwerkzeugeinheiten (2) für die Kunststoffverarbeitung, mit mindestens einem Temperierkreislauf, wobei die Rücklauftemperatur des Temperiermediums oder die Temperautur im Zylinder (2') bzw. Werkzeug (2) gemessen wird und im Ergebnis eines Ist- Sollwertvergleiches der Durchfluß des Temperiermediums verändert wird, dadurch gekennzeichnet, daß

   a) vor der Messung der Rücklauftemperatur des Temperiermediums die mögliche Dauer der Wärmeabfuhr im Zyklus der jeweiligen Einheit zwischen zwei Zeitpunkten $Z_1$ und $Z_2$, in gleiche Teile aufgeteilt wird und die gewünschte Dauer der Wärmeabfuhr vor Beginn der Regelung als relativierte Temperierdauer vorgegeben wird, und danach kontinuierlich die Rücklauf- und Vorlauftemperatur des Temperiermediums gemessen werden, und nach Erreichen des thermischen Gleichgewichtes der jeweiligen Einheit, im Folgezyklus als Sollwert eine dem Wärmeinhalt der Einheit relevante Wertgröße WRG als Fläche über die in Abhängigkeit von der Zeit gemessene Differenz zwischen der Rücklauftemperatur und der Vorlauftemperatur des Temperiermediums eines sogenannten Referenzzyklus für die vorgegebene relativierte Temperierdauer ermittelt und gespeichert wird oder

   b) kontinuierlich die Temperatur im Zylinder (2') bzw. Werkzeug (2) an dem für den betreffenden Temperierkreislauf thermisch sowohl von der Schmelze bzw. der erwärmten Formmasse als auch der Temperierung gleichwertig beaufschlagten Ort gemessen wird und nach Erreichen des thermischen Gleichgewichtes der jeweiligen Einheit, im Folgezyklus als Sollwert eine dem Wärmeinhalt der Einheit relevante Wertgröße WRG als Fläche über die in Abhängigkeit von der Zeit vom Zeitpunkt $Z_1$ bis zum Ablauf einer aus dem Ende des Anfahrmodus ermittelten Temperierdauer $t_D$ gemessene Temperatur eines sogenannten Referenzzyklus ermittelt und gespeichert wird,

   und zu beiden Verfahrensschritten a) und b) in allen nachfolgenden Zyklen die durch den Kurvenverlauf des momentanen Istzustandes und die daraus analog zu dem Referenzzyklus ermittelte Fläche mit der im Referenzzyklus ermittelten Fläche verglichen wird und aus der ermittelten Flächendifferenz als Maß für die Abweichung vom Wärmeinhalt des Referenzzyklus der Korrekturwert für die Dauer des für den im jeweiligen Zyklus ausgelösten Temperierimpulses bestimmt wird, und der ermittelte Temperierimpuls zu dem Zeitpunkt $Z_1$ ausgelöst wird und spätestens zu dem Zeitpunkt $Z_2$ jede mögliche Temperierung im Zyklus beendet wird, wobei die Signale $Z_1$ und $Z_2$ aus der Ablaufsteuerung der Maschineneinheit vorgegeben sind.

2. Verfahren nach Anspruch 1, dadurch gekennzeichnet, daß zur Temperierung von Formwerkzeugen (2) für das Spritzgießen als Zeitpunkt $Z_1$ der Beginn der Nachdruckzeit oder der Beginn des Einspritzvorganges und als Zeitpunkt $Z_2$ das Ende der Werkzeugöffnungsbewegung festgelegt werden.

3. Verfahren nach Anspruch 1, dadurch gekennzeichnet, daß zur Zylindertemperierung von Spritzgießmaschinen (1) als Zeitpunkt $Z_1$ der Plastifizierbeginn (Beginn der Schneckenrotation) und als Zeitpunkt $Z_2$ das Ende der Werkzeugöffnungsbewegung festgelegt werden.

4. Verfahren nach Anspruch 1, dadurch gekennzeichnet, daß die Zeitpunkte $Z_1$ und $Z_2$ durch die gleichen Signale der Maschinenablaufsteuerung festgelegt werden, wobei der Zeitpunkt $Z_2$ mit dem Zeitpunkt $Z_1$ des Folgezyklus identisch ist.

5. Verfahren nach einem der Ansprüche 1, 2 und 4, dadurch gekennzeichnet, daß sich der Meßort für die Temperaturmessung im Bereich der geometrischen Mitte zwischen Formteilkontur (Werkzeugwand) und Temperierkanälen oder Temperierfläche für die Durchströmung des Temperiermediums und im Bereich der Mitte zwischen Temperiermedieneingang und Temperiermedienausgang in einem hinreichend großen Abstand zur Formteilkontur befindet.

6. Verfahren nach einem der Ansprüche 1, 3 und 4 dadurch gekennzeichnet, daß sich der Meßort für die Temperaturmessung in etwa der geometrischen Mitte zwischen Zylinderaußen - und Zylinderinnenwand im mittleren Bereich zwischen Temperiermedieneingang und -ausgang des jeweiligen Temperierkreislaufes befindet.

7. Verfahren nach einem der Ansprüche 1 bis 4, dadurch gekennzeichnet, daß der thermische Gleichgewichtszustand bei der Variante der Messung der Rücklauftemperatur des Temperiermediums während der Anfahrphase zu Beginn des Prozesses durch folgende Verfahrensschritte erreicht wird:

a) im ersten Zyklus des Prozesses wird ein Temperierimpuls $t_{init}$ mit einer festgelegten Dauer zum Zeitpunkt $Z_1$ eingeleitet, um eine erste vollständige Durchspülung des Temperierkreislaufes zu bewirken,

b) in den Folgezyklen wird die relativierte Temperierdauer $t_d$ in Abhängigkeit von dem gewünschten thermischen Niveau in eine bestimmte Anzahl an Anfahrimpulsen unterschiedlicher Dauer je Zyklus nach folgender Beziehung

$$t_{d\text{-}anf} = j \cdot \frac{t_d}{m}$$

wobei

$t_d$     die relativierte Temperierdauer
j     eine Anzahl von 1 bis m und
m     eine Wertzahl von 5 bis 10 für das thermische Niveau, wobei 5 ein niedriges und 10 ein hohes thermisches Niveau ist,

bedeuten,
unterteilt, wobei in jedem Zyklus nur ein Anfahrimpuls eingeleitet wird und die ermittelten Anfahrimpulse so oft eingeleitet werden, bis der vorgegebene Wert von $t_d$ erreicht ist,

c) wenn der Wert $t_d$ erreicht ist, wird für diesen Zyklus das Integral WRG $(Z_1, t_d)$ über den Temperaturverlauf errechnet und gespeichert,

d) in dem Folgezyklus nach dem Zyklus in dem der Wert $t_d$ erstmalig erreicht wurde, wird analog wie im Verfahrensschritt c) das Integral WRG $(Z_1, t_d)$ über den Temperaturverlauf errechnet und mit dem gespeicherten errechneten Wert des Integrals des vorhergehenden Zyklus verglichen, ist die Differenz kleiner als ein vorgegebener Wert $W_G$, so wird dieser Zyklus als Referenzzyklus festgelegt und gespeichert, ist die Differenz gleich oder größer als der Wert WRG ($Z_1$, $t_d$), so wird die Berechnung des Intergrals mit dem Wert des vorhergehenden Zyklus in den Folgezyklen so lange wiederholt, bis der Wert $W_G$ unterschritten und damit der Anfahrprozeß beendet ist.

8. Verfahren nach einem der Ansprüche 1 bis 4 und 7, dadurch gekennzeichnet, daß während des stationären Betriebes in allen Zyklen zum Zeitpunkt $Z_1$ des jeweiligen Zyklus die Temperierung mit der relativierten Temperierdauer $t_d$ gestartet wird, wobei in aufeinanderfolgenden kurzen Zeitintervallen ständig die Vor- und Rücklauftemperatur gemessen, das Integral WRG ($t_{i-1}$, $t_i$) berechnet, mit dem Integral des Referenzzyklus zum jeweils zyklisch gleichen Zeitpunkt verglichen und im Ergebnis der fortlaufend ermittelten Differenz die Temperierdauer $t_d$ im laufenden Zyklus korrigiert wird.

9. Verfahren nach einem der Ansprüche 1 bis 6, dadurch gekennzeichnet, daß der thermische Gleichgewichtszustand bei der Variante der Messung der Temperatur im Zylinder (2') bzw. Werkzeug (2) während der Anfahrphase zu Beginn des Prozesses durch folgende Verfahrensschritte erreicht wird:

a) im allerersten Zyklus, zu Produktionsbeginn, wird zum Zeitpunkt $Z_1$ ein Initialimpuls $t_{init}$ mit fester Dauer eingeleitet, um eine erste vollständige Durchspülung des betreffenden Temperierkreislaufes zu erzielen,

b) beim Erreichen eines definierten Abstandes der gemessenen mittleren Temperatur zur vorgegebenen Solltemperatur wird im Folgezyklus zum Zeitpunkt $Z_1$ ein Temperierimpuls $t_{ann}$ geringerer zeitlicher Dauer eingeleitet, wobei dieser Impuls gleicher Zeitdauer in allen nachfolgenden Zyklen bis zur erstmaligen Überschreitung der vorgegebenen Solltemperatur eingeleitet wird, um ein gedämpftes Annähern der mittleren Werkzeug- bzw. Zylindertemperatur an die gewählte Solltemperatur zu gewährleisten.

c) mit Erreichen bzw. Überschreiten der vorgegebenen Solltemperatur wird das Werkzeug (2) bzw. der Plastifizierzylinder (2') mittels einer je Zyklus aktualisierten Vorgabe eines errechneten Temperiermittelimpulses und einer vom aktuellen Soll-Istwertvergleich im Zyklus abhängigen Temperierphase innerhalb einer Anzahl von n Zyklen in die Nähe des thermischen Gleichgewicht geführt, indem aus der Gesamtdauer der Temperiermittelimpulse einer festgelegten Anzahl unmittelbar vorausgegangener Zyklen das arithmetische Mittel der Temperierdauer je Zyklus ermittelt, mit einem Faktor K1, der den Ausgleich praktisch unvermeidbar auftretender thermischer Störungen auf den Temperaturzustand der Einheit ermöglicht, bewertet und als errechnete Impulsdauer $t_E$ für die Einleitung des Temperiermediums im Folgezyklus zum Zeitpunkt $Z_1$ genutzt wird.

d) ist die vorgegebene Anzahl von n Zyklen nach erstmaliger Überschreitung der vorgegebenen Solltemperatur erreicht, wird im Folgezyklus, zum Zeitpunkt $Z_1$ ein Temperierimpuls der Dauer $t_D$ eingeleitet, wobei $t_D$ gleich dem für diesen Zyklus errechneten Wert $t_E$ ist, und der Wert WRG ($Z_1$, $t_D$) wird berechnet und

e) in dem der erstmaligen Berechnung des Wertes WRG ($Z_1$, $t_D$) folgenden Zyklus, wird der Wert WRG ($Z_1$, $t_D$) für den aktuellen Zyklus errechnet und die Differenz beider Werte verglichen, ist diese Differenz kleiner als ein vorgegebener Wert $W_G$, wird der aktuelle Zyklus als Referenzzyklus festgelegt und der zeitliche Temperaturverlauf im Werkzeug (2) bzw in zylinder (2') in geeigneter Weise gespeichert und die Anfahrphase gilt als abgeschlossen, andernfalls wird die Anfahrphase mit modifizierten Parametern n und K1 ab Verfahrensschritt c) bis zur Unterschreitung des vorgegebenen Wertes $W_G$ im Verfahrensschritt e) fortgesetzt.

10. Verfahren nach Anspruch 9, dadurch gekennzeichnet, daß während der Anfahrphase bei Vorgabe einer Solltemperatur, die unter der ermittelten Isttemperatur liegt, in allen nachfolgenden Zyklen zwischen den Zeitpunkten $Z_1$ und $Z_2$ so lange eine ständige Temperierung erfolgt, bis die gemessene Isttemperatur die vorgegebene Solltemperatur erstmalig unterschreitet, wobei nach Unterschreitung der Solltemperatur die Anfahrphase mit der Einleitung des Temperierimpulses $t_{ann}$ zum Zeitpunkt $Z_1$ des auf die erste Unterschreitung folgenden Zyklus fortgesetzt wird und mit der erneuten Überschreitung der Solltemperatur und der späteren Auswahl des Referenzzyklus beendet wird.

11. Verfahren nach einem der Ansprüche 1 bis 6 und 9 bis 10, dadurch gekennzeichnet, daß während des stationären Betriebes in allen Folgezyklen zum Zeitpunkt $Z_1$ des jeweiligen Zyklus die Temperierung mit der Impulsdauer $t_D$ gestartet wird, wobei in aufeinanderfolgenden kurzen Zeitintervallen zwischen $Z_1$ bis zum Ende der berechneten Temperierdauer $t_D$ die Temperatur gemessen und das Integral $WRG_{ist}$ ($t_{i-1}$, $t_i$) berechnet, mit dem Integral des Referenzzyklus zum jeweils zyklisch gleichen Zeitpunkt verglichen und im Ergebnis der ermittelten Differenz die Temperierdauer $t_D$ im laufenden Zyklus korrigiert wird.

**12.** Verfahren nach einem der Ansprüche 1 bis 11, dadurch gekennzeichnet, daß eine Zusatzheizung vorgesehen ist, die wahlweise vor der Anfahrphase, während der Anfahrphase und der stationären Betriebsphase zuschaltbar ist und nach Erreichen des erforderlichen thermischen Niveaus wieder abgeschalten wird.

**Claims**

**1.** Method of tempering injection-molding machine units (1) especially for processing polymers capable of crosslinking, and molding die units (2) for processing plastics, with at least one tempering circulation, whereby the back flow temperature of the tempering medium or the temperature of the cylinder (2') or mold (2) is measured and the flow-through of the tempering medium is changed as the result of an actualdesired value comparison; characterized in that

a) before the back flow temperature is measured the possible duration of the heat dissipation in the cycle of the respective unit is divided in equal parts between two points in time $Z_1$ and $Z_2$ the desired duration of the heat dissipation is preset prior to the start of the control as the related tempering duration; the back flow and the feed flow temperature of the tempering medium is subsequently continuously measured; and upon reaching the thermal equilibrium in the respective unit, a value quantity WRG, the latter being relevant to the heat content of the unit, is determined and stored in the subsequent cycle as the level of desired value determined in dependence on time via the difference measured between the back flow temperature and the feed flow temperature of the tempering medium of a so-called reference cycle for the preset related tempering duration or

b) the temperature is continuously measured in the cylinder (2') or in the mold (2) in the site thermally equally acted upon for the respective tempering circulation by both the melt or heated molding compound and the tempering process; and, upon reaching the thermal equilibrium in the respective unit, the level of a value quantity WRG, the latter being relevant to the heat content of such unit, is determined and stored in the subsequent cycle as the desired value via the temperature of a so-called reference cycle measured from the point in time $Z_1$ until the expiration of a tempering duration $t_D$ determined based on the end of the starting mode

and to both steps of a) and b) in all subsequentcycles, the level determined based on the curve of the instantaneous actualcondition, and based thereon analogous to the reference is compared with the level determined in the reference cycle; and the correction value for the duration of the tempering impulse triggered in the respective cycle is determined based on the determined difference in level as the measure of the deviation from the heat content of the reference cycle; and that the determined tempering impulse is triggered at the point in time $Z_1$; and that each possible tempering in the cycle is terminated at the point in time $Z_2$ at the latest, whereby the signals $Z_1$ and $Z_2$ are preset points in time from the machine sequence control.

**2.** Method according to claim 1, characterized in that for tempering molding dies (2) for injection molding, the "start of the after-pressure time" or the "start of the injection process" is fixed as the point in time $Z_1$, and the "end of the opening movement of the mold" is fixed as the point in time $Z_2$.

**3.** Method according to claim 1, characterized in that for tempering the cylinder of injection-molding machines (1), the "start of plasticizing" (start of rotation of the screw) is selected as the point in time $Z_1$, and the "end of the opening movement of the mold" is selected as the point in time $Z_2$.

**4.** Method according to claim 1, characterized in that the points in time $Z_1$ and $Z_2$ are fixed by the same signals of the machine sequence control, whereby the point in time $Z_2$ is identical with the point in time $Z_1$ of the subsequent cycle.

**5.** Method according to any one of claims 1, 2 and 4, characterized in that the measuring site for the temperature measurement is located within the zone of the geometric center between the partial contour of the mold (mold wall) and the tempering ducts of the tempering surface for the flow-through of the tempering medium, and within the zone of the center between the inlet of the tempering medium and the outlet of the tempering medium, with a sufficiently large spacing from the partial contour of the mold.

**6.** Method according to any one of claims 1, 3 and 4, characterized in that the measuring site for the temperature measurement is located in about the geometric center between the outside wall of the cylinder and the inside wall of the cylinder in the center zone between the inlet and the outlet of the tempering medium of the respective tempering circulation.

**7.** Method according to any one of claims 1 to 4, characterized in that the condition of thermal equilibrium is obtained by the variant of the back flow temperature of the temperature control medium is measured during the starting phase at the start of the process by the following process steps:

   a) In the first cycle of the process, a tempering impulse $t_{init}$ with a fixed duration is induced at point in time $Z_1$ in order to effect a first complete flushing of the tempering circulation;

   b) in the subsequent cycles, the related tempering duration td is subdivided in dependence on the desired thermal level in a defined number of starting impulses with a different duration per cycle, according to the following relation:

$$t_{d\text{-}start} = j \cdot \frac{t_d}{m} \ ,$$

   whereby

   $t_d$   is the related tempering duration;
   j    is a number from 1 to m; and
   m    is a numerical value from 50 to 10 for the thermal level, whereby 5 denotes a low and 10 a high thermal level;

   whereby only one starting impulse is induced in each cycle and the determined starting impulses are introduced as often as required until the preset value of $t_d$ is reached;

   c) once the value $t_d$ is reached, the integral WRG $(Z_1, t_d)$ is computed for said cycle via the temperature curve, and stored;

   d) in the subsequent cycle following the cycle in which the value td was reached for the first time, the integral WRG $(Z_1, t_d)$ is computed analogous to process step (c) via the temperature curve, and compared with the stored, computed value of the integral of the preceding cycle; if the difference is lower than a predetermined value WG, said cycle is fixed and stored as the reference cycle; if the difference is equal to or higher than the value WRG $(Z_1, t_d)$, the computation of the integral with the value of the preceding cycle is repeated in the subsequent cycles until value WG is not reached, and the starting process is thus terminated.

**8.** Method according to any one of the preceding claims 1 to 4 and 7, characterized in that during the stationary operation, tempering is started with related tempering duration $t_D$ in all cycles at point in time $Z_1$ of each cycle, whereby in consecutive short time intervals the temperatures in the feed and back flows is measured continuously the integral WRG $(t_{i-1}, t_i)$ is computed, compared with the integral of the reference cycle at the cyclically identical point in time in each case, and the tempering duration to is corrected in the current cycle as the result of the determined difference.

**9.** Method according to any one of claims 1 to 6, characterized in that the condition of thermal equilibrium obtained by the variant of temperature control in the cylinder (2') or in the mold (2) during the starting phase at the start of the process by the following process steps:

   a) in the very first cycle, at the start of production, an initial impulse $t_{init}$, of a fixed duration is induced at point in time $Z_1$ in order to achieve a first complete flushing of the respective tempering circulation;

   b) upon reaching a defined separation of the measured mean temperature from the preset desired temperature, a tempering impulse $t_{approx}$ of a lesser time duration is induced in the subsequent cycle at the point in time $Z_1$, whereby said impulse of the same time duration is induced in all subsequent cycles until the preset desired temperature is exceeded for the first time, in order to assure a lessened approximation of the mean mold or cylinder temperature to the selected desired temperature;

c) upon reaching or exceeding of the preset desired temperature, the mold (2) or the plasticizing cylinder (2') is controlled within a number of n-cycles to near the thermal equilibrium by means of the input of a computed tempering medium impulse, such input being updated per cycle, and of a tempering phase depending upon the current desired-actual value comparison in the cycle, in that the arithmetic mean of the tempering duration per cycle is determined based on the total duration of the tempering impulses of a fixed number of immediately preceding cycles; valuated with a factor K1, the latter permitting compensation of the practically unavoidably occurring thermal interferences acting on the temperature condition of the unit; and used as the computed impulse duration $t_E$ for introducing the tempering medium in the subsequent cycle at point in time $Z_1$;

d) once the preset number of n-cycles is reached after the preset desired temperature has been exceeded for the first time, a tempering impulse of duration $t_D$ is introduced in the subsequent cycle at point in time $Z_1$, whereby $t_D$ is equal to the value tE computed for said cycle; and the value WRG ($Z_1$, $t_D$) is computed; and

e) in the cycle following the first computation of the value WRG ($Z_1$, $t_D$), the value WRG ($Z_1$, $t_D$) the value WRG ($Z_1$, $t_D$) is computed for the current cycle, and the difference between the two values is compared; and, if such difference is lower than a preset value $W_G$, the current cycle is fixed as the reference cycle and the time curve of the temperature in the mold (2) or in the cylinder (2') is stored in a suitable way; and the starting phase is deemed terminated; otherwise, the starting phase is continued with modified parameters n and K1 starting with process step (c) until the preset value $W_G$ is not reached in process step (e).

10. Method according to claim 9, characterized in that during the starting phase with presetting of a desired temperature below the determined actual temperature, continuous tempering takes place at all subsequent cycles between the points in time $Z_1$ and $Z_2$ until the measured actual temperature falls short of the predetermined desired temperature for the first time, whereby upon falling short of the desired temperature, the starting phase is continued with the introduction of tempering impulse $t_{approx}$ at point in time $Z_1$ of the cycle following the first falling short, and terminated when the desired temperature is exceeded again and by later selection of the reference cycle.

11. Method according to any one of the preceding claims 1 to 6 and 9 to 10, characterized in that during the stationary operation, tempering is started with impulse duration $t_D$ in all subsequent cycles at point in time $Z_1$ of each cycle, whereby the temperature is measured in consecutive short time intervals between $Z_1$ until the end of the computed tempering duration $t_D$, and the integral $WRG_{actual}$ ($t_{i-1}$, $t_i$) is computed, compared with the integral of the reference cycle at the cyclically identical point in time in each case, and the tempering duration $t_D$ is corrected in the current cycle as the result of the determined difference.

12. Method according to any one of the preceding claims 1 to 11, characterized in that provision is made for an additional heating arrangement, which can be selectively added prior to the starting phase and during the starting and stationary phases, and which is switched off again after the required thermal level has been reached.

**Revendications**

1. Procédé d'équilibrage de la température d'unités de presses à injection (1), notamment pour le traitement de polymères réticulables, et d'unités d'outils de moulage (2) pour le traitement du plastique, ayant au moins un circuit d'équilibrage de la température, la température retour de l'agent d'équilibrage de la température ou la température dans le cylindre (2') ou bien dans l'outil (2) étant mesurée et le passage de l'agent d'équilibrage étant modifié suite à une comparaison valeur de consigne/valeur réelle, caractérisé par le fait que

a) avant le mesurage de la température retour de l'agent d'équilibrage de la température, la durée éventuelle de l'évacuation de la chaleur durant le cycle de l'unité respective entre deux moments $Z_1$ et $Z_2$ est divisée en parties égales et la durée désirée de l'évacuation de la chaleur est prédonnée avant le début du réglage en tant que durée d'équilibrage de la température relativisée et, ensuite, la température aller et la température retour de l'agent d'équilibrage de la température est mesurée en continu et, après que l'équilibre thermique de l'unité respective a été obtenu en tant que valeur de consigne au cours du cycle suivant, une grandeur de valeur WRG importante pour la capacité thermique de l'unité est déterminée et mémorisée en tant que surface par la différence mesurée en fonction du temps entre la température retour et la température aller de l'agent d'équilibrage de la température d'un cycle appelé cycle de référence pour la durée d'équilibrage de la température relativisée prédonnée ou

b) la température est mesurée en continu dans le cylindre (2') ou bien dans l'outil (2) à l'endroit sollicité pour le circuit d'équilibrage de la température en question au niveau thermique de façon équivalente aussi bien par le bain ou bien la masse de moulage réchauffée que par l'équilibrage de la température et, après que l'équilibrage thermique de l'unité respective a été obtenu en tant que valeur de consigne au cours du cycle suivant, une grandeur de valeur WRG importante pour la capacité calorique de l'unité est déterminée et mémorisée en tant que surface par la température d'un cycle appelé cycle de référence mesurée en fonction du temps du moment $Z_1$ jusqu'à l'écoulement d'une durée d'équilibrage de la température $t_D$ déterminée à la fin du mode de démarrage,

et la surface déterminée grâce à l'allure de la courbe de l'état réel momentané et la surface déterminée à partir de cela de façon analogue au cycle de référence sont comparées aux deux étapes de procédé a) et b) au cours de tous les cycles suivants à la surface déterminée au cours du cycle de référence et la valeur de correction est déterminée pour la durée de l'impulsion d'équilibrage de la température déclenchée au cours du cycle respectif à partir de la différence de surface déterminée en tant que mesure de l'écart de la capacité thermique du cycle de référence, et l'impulsion d'équilibrage de la température déterminée au moment $Z_1$ est déclenchée et chaque équilibrage éventuel de la température se termine au cours du cycle au plus tard au moment $z_2$, les signaux $Z_1$ et $Z_2$ étant prédonnés à partir de la commande séquentielle de l'unité de machine.

2. Procédé selon la revendication 1, caractérisé par le fait que, en vue de l'équilibrage de la température d'outils de moulage (2) pour l'injection, le début du temps de maintien en pression ou le début de l'opération d'injection est défini comme étant le moment $Z_1$ et la fin du mouvement d'ouverture de l'outil comme étant le moment $Z_2$.

3. Procédé selon la revendication 1, caractérisé par le fait que, en vue de l'équilibrage de la température du cylindre de presses à injection (1), le début de la plastification (début de la rotation de la vis sans fin) est défini comme étant le moment $Z_1$ et la fin du mouvement d'ouverture de l'outil comme étant le moment $Z_2$.

4. Procédé selon la revendication 1, caractérisé par le fait que les moments $Z_1$ et $Z_2$ sont définis par les mêmes signaux de la commande séquentielle de machine, le moment $Z_2$ étant identique au moment $z_1$ du cycle suivant.

5. Procédé selon l'une des revendications 1, 2 et 4, caractérisé par le fait que le point de mesure du mesurage de la température se trouve dans le domaine du centre géométrique situé entre le contour de la pièce moulée (paroi de l'outil) et les canaux d'équilibrage de la température ou la surface d'équilibrage de la température pour le passage de l'agent d'équilibrage et dans le domaine du centre situé entre l'entrée de l'agent d'équilibrage de la température et la sortie de l'agent d'équilibrage de la température à un écart suffisamment élevé par rapport au contour de la pièce moulée.

6. Procédé selon l'une des revendications 1, 3 et 4, caractérisé par le fait que le point de mesure du mesurage de la température se trouve environ au centre géométrique situé entre la paroi extérieure du cylindre et la paroi intérieure du cylindre dans le domaine médian situé entre l'entrée et la sortie de l'agent d'équilibrage de la température du circuit d'équilibrage de la température respectif.

7. Procédé selon l'une des revendications 1 à 4, caractérisé par le fait que l'état d'équilibre thermique est obtenu pour la variante du mesurage de la température retour de l'agent d'équilibrage de la température pendant la phase de démarrage au début du processus par les étapes de procédé suivantes :

a) au cours du premier cycle du processus, une impulsion d'équilibrage de la température $t_{départ}$ de durée définie est introduite au moment $Z_1$ dans le but de réaliser un premier lavage complet du circuit d'équilibrage de la température,

b) au cours des cycles suivants, la durée d'équilibrage de la température relativisée $t_d$ est subdivisée en fonction du niveau thermique désiré en un certain nombre d'impulsions de démarrage de durée différente selon le cycle d'après la relation suivante

$$t_{d\text{-}démarrage} = j \cdot \frac{t_d}{m}$$

dans laquelle

$t_d$ signifie la durée d'équilibrage de la température relativisé

j un nombre allant de 1 à m et

m une valeur de référence allant de 5 à 10 pour le niveau thermique, 5 étant un niveau thermique bas et 10 un niveau thermique élevé,

une seule impulsion de démarrage étant introduite au cours de chaque cycle et les impulsions de démarrage déterminées étant introduites jusqu'à ce que la valeur prédonnée de $t_d$ soit atteinte,

c) quand la valeur $t_d$ est atteinte, l'intégrale $WRG(Z_1,t_d)$ est calculée et mémorisée pour ce cycle sur toute l'évolution de la température,

d) au cours du cycle suivant après le cycle dans lequel la valeur $t_d$ a été atteinte pour la première fois, l'intégrale $WRG(Z_1,t_d)$ est calculée sur toute l'évolution de la température de façon analogue à l'étape de procédé c) et est comparée à la valeur calculée mémorisée de l'intégrale du cycle précédent, si la différence est inférieure à une valeur prédonnée $W_G$, ce cycle est défini et mémorisé comme étant le cycle de référence, si la différence est égale ou supérieure à la valeur $WRG(Z_1,t_d)$, le calcul de l'intégrale avec la valeur du cycle précédent est réitéré au cours des cycles suivants jusqu'à ce que l'on ait un passage en dessous de la valeur $W_G$ et, ainsi, le processus de démarrage est terminé.

8. Procédé selon l'une des revendications 1 à 4 et 7 , caractérisé par le fait que l'équilibrage de la température de durée d'équilibrage de la température relativisée $t_d$ est lancé pendant le fonctionnement stationnaire au cours de tous les cycles au moment $Z_1$ du cycle respectif, la température avant et aller étant mesurée à de brefs intervalles de temps successifs, l'intégrale $WRG(t_{i-1},t_i)$ étant calculée, comparée à l'intégrale du cycle de référence au moment à cycle chaque fois égal et la durée d'équilibrage de la température $t_d$ étant corrigée dans le cycle en cours suite à la différence déterminée consécutivement.

9. Procédé selon l'une des revendications 1 à 6, caractérisé par le fait que l'état d'équilibre thermique est obtenu grâce à la variante du mesurage de la température dans le cylindre (2') ou bien dans l'outil (2) pendant la phase de démarrage au début du processus grâce aux étapes de procédé suivantes :

a) une impulsion de départ $t_{départ}$ de durée définie est introduite au cours du tout premier cycle au début de la production au moment $Z_1$ dans le but de réaliser un premier lavage complet du circuit d'équilibrage de la température en question,

b) une impulsion d'équilibrage de la température $t_{ann}$ de durée dans le temps moins importante est introduite au cours du cycle suivant au moment $Z_1$ lorsqu'on obtient un écart défini de la température moyenne mesurée par rapport à la température de consigne prédonnée, cette impulsion de durée dans le temps égale étant introduite au cours de tous les cycles suivants jusqu'à ce que la température de consigne prédonnée soit dépassée pour la première fois dans le but de garantir un rapprochement amorti de la température moyenne du cylindre ou bien de l'outil de la température de consigne choisie,

c) une fois que la température de consigne prédonnée est atteinte ou dépassée, l'outil (2) ou bien le cylindre de plastification (2') est amené aux environs de l'équilibre thermique en l'espace d'un nombre de n cycles en prédonnant, après une actualisation par cycle, une impulsion d'agent d'équilibrage de la température calculée et à l'aide d'une phase d'équilibrage de la température dépendant de la comparaison actuelle valeur de consigne/valeur réelle, en déterminant, à partir de la durée totale des impulsions d'équilibrage de la température d'un nombre défini de cycles directement antérieurs, la moyenne arithmétique de la durée d'équilibrage de la température pour chaque cycle avec un facteur K1 qui permet la compensation de perturbations thermiques pratiquement inévitables influençant l'état de la température de l'unité, qui calcule celle-ci et qui est utilisé en tant que durée d'impulsion $t_E$ pour l'introduction de l'agent d'équilibrage de la température au cours du cycle suivant au moment $Z_1$,

d) si le nombre prédonné de n cycles est atteint après le premier dépassement de la température de consigne prédonnée, une impulsion d'équilibrage de la température de durée $t_D$ est introduite au cours du cycle suivant au moment $Z_1$, $t_D$ étant égale à la valeur $t_E$ calculée pour ce cycle, et la valeur $WRG(Z_1, t_D)$ étant calculée et

e) la valeur $WRG(Z_1, t_D)$ est calculée pour le cycle actuel au cours du cycle suivant le premier calcul de la valeur $WRG(Z_1, t_D)$ et la différence des deux valeurs est comparée, si cette différence est inférieure à une valeur prédonnée $W_G$, le cycle actuel est défini comme étant le cycle de référence et l'évolution de la température dans le temps dans l'outil (2) ou bien dans le cylindre (2') est mémorisée de façon appropriée et la phase de démarrage est considérée comme étant terminée, dans le cas contraire, la phase de démarrage est poursuivie avec les paramètres n et K1 modifiés à partir de l'étape de procédé c) jusqu'au passage en dessous de la valeur prédonnée $W_G$ de l'étape de procédé e).

10. Procédé selon la revendication 9, caractérisé par le fait qu'un équilibrage constant de la température a lieu à tous les moments suivants $Z_1$ et $Z_2$ pendant la phase de démarrage en prédonnant une température de consigne se trouvant en dessous de la température réelle déterminée jusqu'à ce que la température réelle mesurée passe pour la première fois en dessous de la température de consigne prédonnée, la phase de démarrage étant poursuivie après le passage en dessous de la température de consigne avec l'introduction de l'impulsion d'équilibrage de la température $t_{ann}$ au moment $Z_1$ du cycle succédant au premier passage en dessous et étant terminée avec le nouveau dépassement de la température consigne et de la sélection ultérieure du cycle de référence.

11. Procédé selon l'une des revendications 1 à 6 et 9 à 10, caractérisé par le fait que l'équilibrage de la température de durée d'impulsion $t_D$ est lancé pendant le fonctionnement stationnaire au cours de tous les cycles suivants au moment $Z_1$ du cycle respectif, la température étant mesurée à de courts intervalles de temps successifs situés entre $Z_1$ et jusqu'à la fin de la durée d'équilibrage de la température calculée $t_D$ et l'intégrale $WRG_{réelle}(t_{i-1},t_i)$ étant calculée, comparée à l'intégrale du cycle de référence au moment à cycle égal respectivement et la durée d'équilibrage de la température $t_D$ étant corrigée dans le cycle en cours suite à la différence déterminée.

12. Procédé selon l'une des revendications 1 à 11, caractérisé par le fait qu'un dispositif chauffant supplémentaire est prévu, dispositif qui est susceptible d'être appliqué au choix avant la phase de démarrage, pendant la phase de démarrage et la phase en fonctionnement stationnaire et qui est de nouveau arrêté après que le niveau thermique requis est atteint.

Figur 1

Figur 2